(19)

Europäisches
Patentamt
European
Patent Office
Office européen
des brevets

(11) **EP 4 650 330 A1**

(12) **EUROPEAN PATENT APPLICATION**

(43) Date of publication:
**19.11.2025 Bulletin 2025/47**

(21) Application number: **25176432.0**

(22) Date of filing: **14.05.2025**

(51) International Patent Classification (IPC):
**C03C 10/00** (2006.01)   **C03C 3/097** (2006.01)
**C03C 3/11** (2006.01)

(52) Cooperative Patent Classification (CPC):
**C03C 10/0027; C03C 3/097; C03C 3/11**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.05.2024 DE 102024113731**

(71) Applicant: **SCHOTT AG
55122 Mainz (DE)**

(72) Inventor: **MITRA, Ina
55122 Mainz (DE)**

(74) Representative: **Schott Corporate IP
Hattenbergstraße 10
55122 Mainz (DE)**

(54) **GLASS-CERAMIC WITH SPECIFIC THERMAL EXPANSION BEHAVIOR**

(57)    The present invention relates to a glass-ceramic with improved thermal expansion behavior as well as its use in a precision component. The LAS glass-ceramic comprises components (in mol% based on oxide) such as $SiO_2$ in 60 - 70, $Li_2O$ in 7 - 9.4, $R_2O$ in 0.7 - 2.0, wherein R = Na, K, Cs, Rb, MgO+ZnO in 0 - 0.4, at least one component selected from the group consisting of $P_2O_5$ and RO, where RO is selected from CaO, BaO and/or SrO, and nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

Fig. 1

EP 4 650 330 A1

**Description**

**FIELD OF THE INVENTION**

The present invention relates to a glass-ceramic with a specific thermal expansion behavior and simultaneously good meltability, formability and ceramizability, as well as the use of the glass-ceramic according to the invention in a precision component.

**BACKGROUND OF THE INVENTION**

Materials and precision components with low thermal expansion or low CTE (Coefficient of Thermal Expansion) are already known in the state of the art.

Ceramics, Ti-doped fused silica and glass-ceramics are known as materials for precision components with low thermal expansion in the temperature range around room temperature. Glass-ceramics with low thermal expansion are particularly lithium-aluminum-silicate glass-ceramics (LAS glass-ceramics) which are described for example in US 4,851,372, US 5,591,682, EP 587979 A, US 7,226,881, US 7,645,714, DE 102004008824 A, DE 102018111144 A. Other materials for precision components are cordierite ceramics or cordierite glass-ceramics.

Such materials are often used for precision components that must meet particularly strict requirements with regard to their properties (e.g. mechanical, physical, optical properties). They are used especially in terrestrial and space-based astronomy and earth observation, LCD lithography, microlithography and EUV lithography, metrology, spectroscopy and measurement technology. In this context, it is necessary that the components, depending on the specific application, have an extremely low thermal expansion.

In general, the determination of the thermal expansion of a material is carried out by a static method, in which the length of a test specimen is determined at the beginning and end of the specific temperature interval and the mean expansion coefficient $\alpha$ or CTE (Coefficient of Thermal Expansion) is calculated from the length difference. The CTE is then given as an average for this temperature interval, e.g. for the temperature interval from 0°C to 50°C as CTE(0;50) or $\alpha$ (0;50).

To meet the ever-increasing requirements, materials have been developed that have a CTE better adapted to the application of a component formed from the material. For example, the average CTE can be optimized not only for the standard temperature interval CTE(0;50), but for example for a temperature interval around the actual application temperature, such as the interval from 19°C to 25°C, i.e. CTE(19;25) for certain lithography applications. In addition to determining the average CTE, the thermal expansion of a test specimen can also be determined in very small temperature intervals and thus represented as a CTE-T curve. Preferably, such a CTE-T curve can have a zero crossing at one or more temperatures, preferably at or near the planned application temperature. At a zero crossing of the CTE-T curve, the relative length change with temperature change is particularly small. For some glass-ceramics, such a zero crossing of the CTE-T curve can be shifted to the application temperature of the component by suitable temperature treatment. In addition to the absolute CTE value, the slope of the CTE-T curve around the application temperature should also be as low as possible to cause as little length change of the component as possible with slight temperature changes. The aforementioned optimizations of the CTE or thermal expansion are usually carried out for these special zero-expansion glass-ceramics with constant composition by varying the ceramization conditions.

A disadvantageous effect in known precision components and materials, especially in glass-ceramics such as LAS glass-ceramics, is the "thermal hysteresis", hereinafter referred to simply as "hysteresis". Hysteresis here means that the length change of a test specimen during heating at a constant heating rate differs from the length change of the test specimen during subsequent cooling at a constant cooling rate, even if the magnitude of the cooling rate and heating rate is the same. If the length change is graphically represented as a function of temperature for heating and cooling, a classic hysteresis loop results. The extent of the hysteresis loop also depends on the rate of temperature change. The faster the temperature change occurs, the more pronounced the hysteresis effect.

The hysteresis effect makes it clear that the thermal expansion of an LAS glass-ceramic depends on temperature and time, i.e. for example on the rate of temperature change, which has also been described occasionally in the technical literature, e.g. O. Lindig and W. Pannhorst, "Thermal expansion and length stability of ZERODUR® in dependence on temperature and time", APPLIED OPTICS, Vol. 24, No. 20, Oct. 1985; R. Haug et al., "Length variation in ZERODUR® M in the temperature range from -60°C to +100°C", APPLIED OPTICS, Vol. 28, No.19, Oct. 1989; R. Jedamzik et al., "Modeling of the thermal expansion behavior of ZERODUR® at arbitrary temperature profiles", Proc. SPIE Vol. 7739, 2010; D.B. Hall, "Dimensional stability tests over time and temperature for several low-expansion glass-ceramics", APPLIED OPTICS, Vol. 35, No. 10, April 1996.

Since the length change of a glass-ceramic exhibiting thermal hysteresis lags behind or precedes the temperature change, the material or a precision component thereof shows a disruptive isothermal length change, i.e. after a temperature change, a length change of the material still occurs at the time when the temperature is already held constant (so-called "isothermal holding"), until a stable state is reached. When the material is subsequently reheated and cooled, the same effect occurs again.

Regarding the properties of materials, especially glass-ceramics, for use in precision components, a temperature range of 0°C to 50°C, particularly 10°C to 35°C or 19°C to 25°C, is often relevant, with a temperature of 22°C generally referred to as room temperature. Since many applications of precision components take place in the temperature range from above 0°C to room temperature, materials with thermal hysteresis effects and isothermal length changes are disadvantageous, as optical disturbances can occur, for example, in optical components such as lithography mirrors and astronomical or space-based mirrors. In other precision components made of glass-ceramics used in measurement technology (e.g. precision scales, reference plates in interferometers), measurement inaccuracies can be caused by the effect.

Some known materials such as ceramics, Ti-doped fused silica, and certain glass-ceramics are characterized by an average thermal expansion coefficient CTE (0;50) of $0 \pm 0.1 \times 10^{-6}$/K (corresponding to $0 \pm 0.1$ ppm/K) or better. Materials that have such a low average CTE in the mentioned temperature range are referred to as zero-expansion materials in the sense of this invention. However, glass-ceramics, especially LAS glass-ceramics, whose average CTE is optimized in this way, usually exhibit thermal hysteresis in the temperature range of 10°C to 35°C. This means that especially for applications around room temperature (i.e. 22°C), these materials show a disruptive hysteresis effect that impairs the accuracy of precision components manufactured with such a material. Therefore, a glass-ceramic material was developed (see US 4,851,372) that shows no significant hysteresis at room temperature, although the effect is not eliminated but only shifted to lower temperatures, so that this glass-ceramic shows a significant hysteresis at temperatures of 10°C and below, which can still be disruptive. To characterize the thermal hysteresis of a material in a specific temperature range, the thermal behavior of the materials is therefore considered for different temperature points in this range within the framework of this invention. There are even glass-ceramics that show no significant hysteresis at 22°C and at 5°C, however, these glass-ceramics have an average CTE (0;50) of $> 0 \pm 0.1$ ppm/K, meaning they are no zero-expansion glass-ceramics in the sense of the above definition.

In US 2022/0298079 A1, US 2022/0298062 A1 and WO2022/194846 A1, zero-expansion, hysteresis-free glass-ceramics are described. In the context of these applications, it was recognized that the components MgO and ZnO promote the occurrence of thermal hysteresis, and it is therefore essential to limit the content of MgO and ZnO to provide an LAS glass-ceramic that is hysteresis-free at least in the temperature range of 10°C to 35°C.

It is desirable, for example for an application in EUV lithography, to further improve the expansion properties, in particular to achieve a particularly flat CTE-T curve in an especially wide temperature range between 0 and 100°C.

Glass-ceramics with a particularly flat CTE-T curve or a CTE plateau are described in DE 10 2028 11 144 A1. According to this document, to achieve a CTE plateau, a specific ratio and a specific content of both ZnO and MgO - totaling at least 1.8 mol% - is required, among other things. However, these glass-ceramics are not hysteresis-free.

EUVL components should also have good polishability and good post-processing capability using ion beam figuring (IBF). For this purpose, it is advantageous that a BaO content in the glass-ceramic is as low as possible.

Another requirement for a glass-ceramic material is good meltability of the glass components as well as simple melt management and homogenization of the underlying glass melt in large-scale production facilities, in order to - after ceramization of the glass - meet the high requirements for the glass-ceramic in terms of CTE homogeneity, internal quality - especially a low number of inclusions (particularly bubbles), low striae level - and polishability, etc.

Thus, one objective of the invention was to provide a glass-ceramic that is not only zero-expanding and hysteresis-free but also has a flat CTE-T curve and good polishability, i.e., is largely BaO-free. A further objective was to provide a glass-ceramic that can be produced on a large scale with zero expansion and reduced thermal hysteresis, particularly in the temperature range of 10°C to 35°C, and precision components made from this material.

The aforementioned objective is solved by the embodiments described in the patent claims. The present invention has various aspects:

According to one aspect of the invention, an LAS glass-ceramic is provided which has a mean thermal expansion coefficient CTE in the range of 0 to 50°C of at most $0 \pm 0.02 \times 10^{-6}$/K and a thermal hysteresis of < 0.1 ppm at least in the temperature range of 10°C to 35°C, and which comprises the following components (in mol% based on oxide):

| | |
|---|---|
| $SiO_2$ | 60 - 70 |
| $Li_2O$ | 7 - 9.4 |
| $R_2O$ (with R=Na, K, Cs, Rb) | 0.7 - 2.0 |
| MgO+ZnO | 0 - 0.4 |

- at least one component selected from the group consisting of $P_2O_5$ and RO, where RO is selected from CaO, BaO and/or SrO, and
- nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

According to a second aspect of the invention, an LAS glass-ceramic is provided which has a mean thermal expansion coefficient CTE in the range of 0 to 50°C of at most $0 \pm 0.02 \times 10^{-6}$/K and a thermal hysteresis of < 0.1 ppm at least in the temperature range of 10°C to 35°C, and which comprises the following components (in mol% based on oxide):

| | |
|---|---|
| $SiO_2$ | 60-70 |
| $Li_2O$ | 7-9.4 |
| $R_2O$ (with R=Na, K, Cs, Rb) | 0.7 - 2.0 |
| MgO+ZnO | 0-0.4 |
| BaO | 0-< 0.5 |

- at least one component selected from the group consisting of $P_2O_5$ and RO, where RO is selected from CaO and/or SrO, and
- nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

According to a third aspect of the invention, an LAS glass-ceramic is provided which has a mean thermal expansion coefficient CTE in the range of 0 to 50°C of at most $0 \pm 0.02 \times 10^{-6}$/K and a thermal hysteresis of < 0.1 ppm at least in the temperature range of 10°C to 35°C, and which comprises the following components (in mol% based on oxide):

| | |
|---|---|
| $SiO_2$ | 60-70 |
| $Li_2O$ | 7-9.4 |
| $K_2O$ | 0.7 - 2.0 |
| $Na_2O$ | 0-0.4 |
| MgO+ZnO | 0-0.4 |

- at least one component selected from the group consisting of $P_2O_5$ and RO, where RO is selected from CaO, BaO and/or SrO, and
- nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

According to a fourth aspect of the invention, an LAS glass-ceramic is provided which has a mean thermal expansion coefficient CTE in the range of 0 to 50°C of at most $0 \pm 0.02 \times 10^{-6}$/K and a thermal hysteresis of < 0.1 ppm at least in the temperature range of 10°C to 35°C, and which comprises the following components (in mol% based on oxide):

| | |
|---|---|
| $SiO_2$ | 60-70 |
| $Li_2O$ | 7-9.4 |
| $K_2O$ | 0.7 - 2.0 |
| $Na_2O$ | 0-0.4 |
| MgO+ZnO | 0-0.4 |
| BaO | 0 - < 0.5 |

- at least one component selected from the group consisting of $P_2O_5$ and RO, where RO is selected from CaO and/or SrO, and
- nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

According to another aspect, the invention relates to the use of such an LAS glass-ceramic as a substrate for a precision component.

According to a further aspect, the invention relates to the use of an LAS glass-ceramic in a precision component, particularly for use in metrology, spectroscopy, measurement technology, lithography, astronomy or earth observation from space, for example as mirrors or mirror substrates for segmented or monolithic astronomical telescopes or also as weight-reduced or ultra-light mirror substrates for space-based telescopes, for example, or as high-precision structural components for distance measurement, e.g. in space, or optics for earth observation, as precision components such as standards for precision measurement technology, precision scales, reference plates in interferometers, as mechanical precision parts, e.g. for ring laser gyroscopes, spiral springs for the watch industry, as mirrors and prisms in LCD lithography, for example, as mask holders, wafer stages, reference plates, reference frames and grid plates in microlithography and in EUV (extreme UV) microlithography, where reflective optics are used, furthermore as mirrors and/or photomask substrates or reticle mask blanks in EUV microlithography.

According to another aspect, the invention relates to a precision component comprising an LAS glass-ceramic.

## Brief description of the Figures

The figures show:

Figure 1 shows CTE-T curves of the LAS glass-ceramic according to Example 4.
Figures 2 and 3 show CTE-T curves of the LAS glass-ceramic according to Example 2.
Figure 4 shows a CTE-T curve of the LAS glass-ceramic according to Example 6.
Figure 5 shows the hysteresis curve of the LAS glass-ceramic according to Example 4.
Figure 6 shows a CTE-T curve of the LAS glass-ceramic according to Example 2.

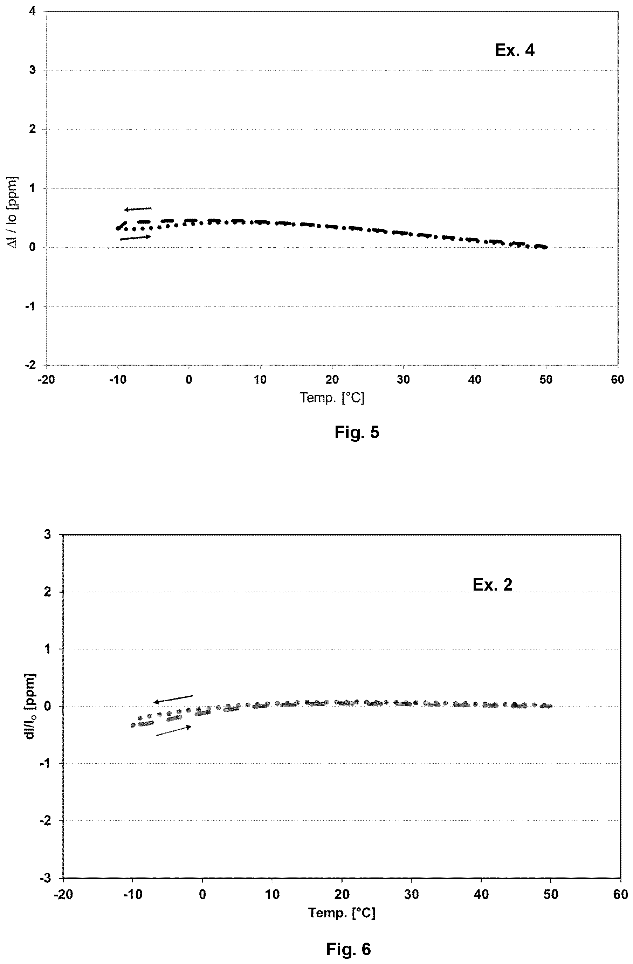

Figure 5 shows CTE-T curves of the LAS glass-ceramic according to Example 2.

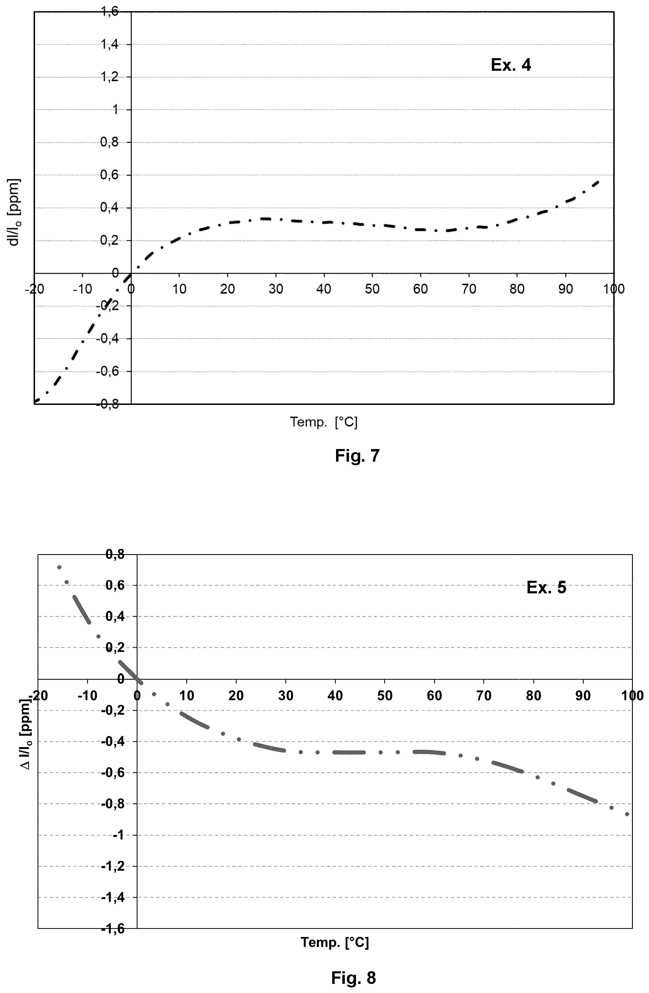

Figures 7 to 9 show normalized $l/l_0$-T curves (also called $dl/l_0$ curves) of glass-ceramics according to the invention (compositions according to Ex. 4, 5 and 3).

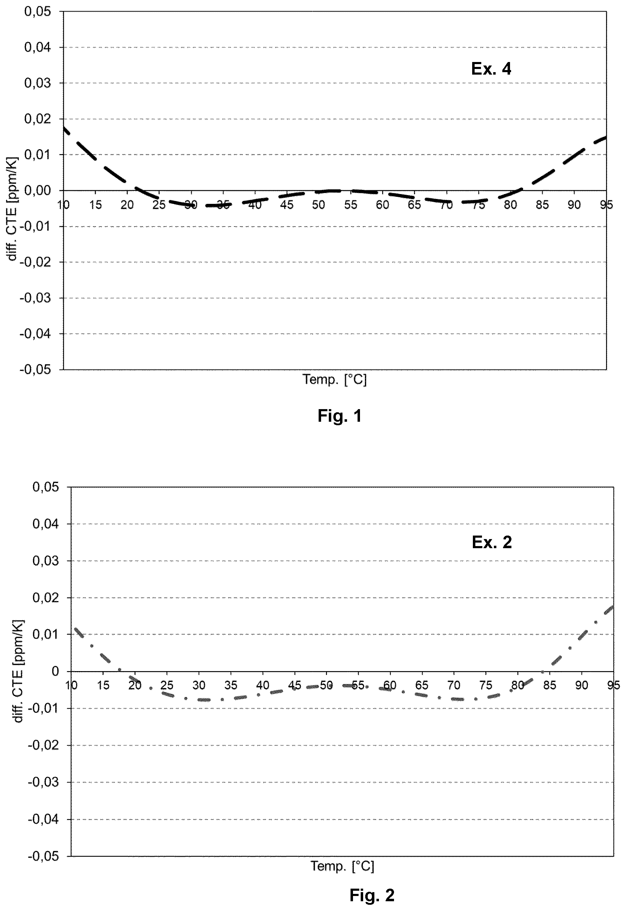

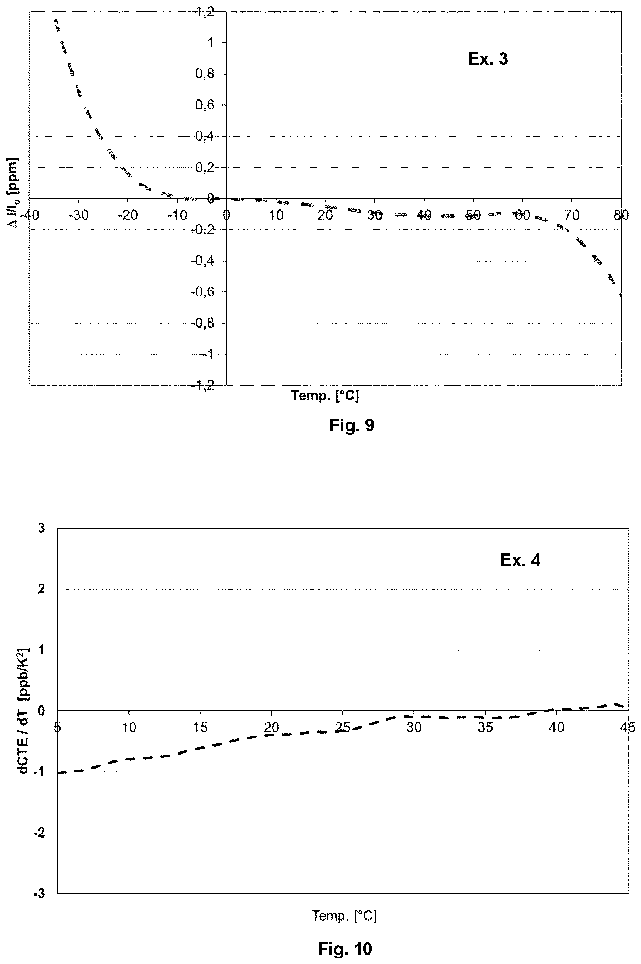

Figures 10 to 13 show the slopes of CTE-T curves from Figures 1, 2, 4 and 9.

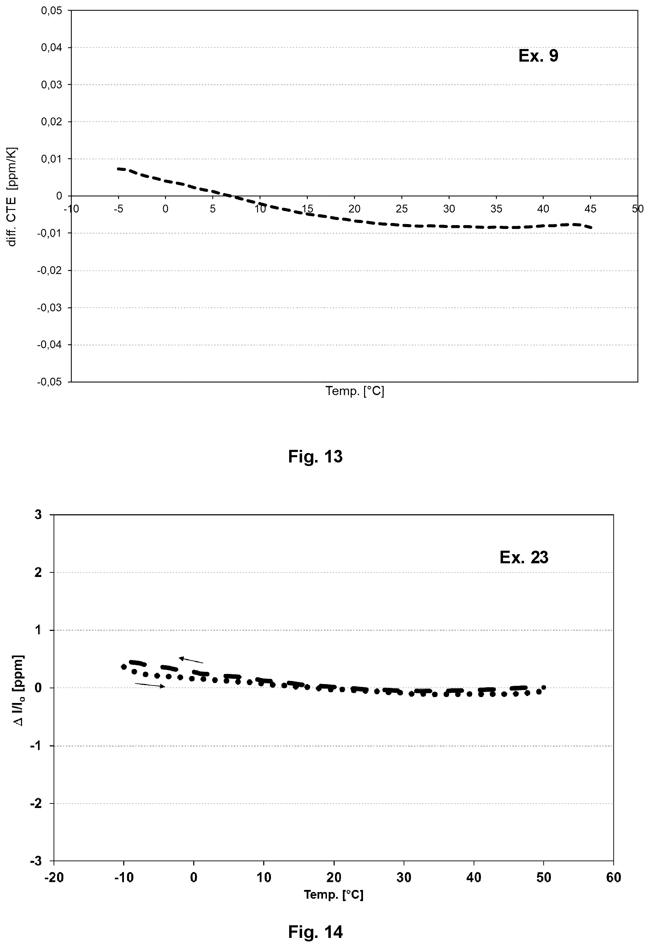

Figure 14 shows the hysteresis curve of the LAS glass-ceramic according to Example 23.

## Detailed Description of the Invention

The invention provides an LAS glass-ceramic (hereinafter also referred to as glass-ceramic) which for the first time combines all relevant properties:

- A mean thermal expansion coefficient CTE in the range of 0 to 50°C of at most $0 \pm 0.02 \times 10^{-6}$/K, i.e. it is zero-expanding.
- Furthermore, it exhibits a thermal hysteresis of < 0.1 ppm, preferably < 0.08 ppm, more preferably < 0.05 ppm, at least in the temperature range from 10°C to 35°C. A material with such a low hysteresis effect of < 0.1 ppm in the mentioned temperature range is hereinafter referred to as "hysteresis-free". Since the extent of hysteresis, as mentioned above, depends on the rate of temperature change used for determination, statements regarding hysteresis in the context of the invention refer to a heating rate/cooling rate of 36 K/h, i.e. 0.6 K/min. In advantageous embodiments, the LAS glass-ceramic can be hysteresis-free at least in the temperature range of 5°C to 35°C or at least 5°C to 40°C, advantageously at least in the temperature range > 0°C to 45°C, according to specific embodiments even at least in the temperature range of -5°C to 50°C.
- The glass-ceramic further exhibits a flat CTE-T curve or a CTE plateau in the relevant temperature range and contains no or only small amounts of BaO.
- Additionally, the temperature at which the glass melt has a viscosity of $10^3$ dPas, i.e. the temperature T3, is at most 1480°C, preferably at most 1460°C.
- Variants of the invention are BaO-free and are therefore suitable for IBF treatment.

In particular, the characteristics CTE, thermal hysteresis and flat CTE-T curve or CTE plateau are described in detail below.

Glass-ceramics are understood to be inorganic, non-porous materials with a crystalline phase and a glassy phase, where typically the matrix, i.e. the continuous phase, is a glass phase. To produce the glass-ceramic, the components of the glass-ceramic are first mixed, melted and refined, and a so-called green glass is cast. After cooling, the green glass is controllably crystallized by reheating (so-called "controlled volume crystallization"). The chemical composition (analysis) of the green glass and the glass-ceramic produced from it are the same; ceramization only changes the internal structure of the material. Therefore, when the composition of the glass-ceramic is discussed below, the same applies to the precursor object of the glass-ceramic, i.e. the green glass.

Until now, it was assumed that the glass components MgO and ZnO in combination or individually are necessary, especially for zero-expansion LAS glass-ceramics, to create a flat CTE-T curve of the material, i.e. with a low slope of the CTE-T curve or a CTE plateau in the relevant temperature range. On the other hand, it was found that for hysteresis-free LAS glass-ceramics, the components MgO and ZnO may only be present in the glass-ceramic in at most small proportions. Thus, there was a conflict of objectives in that an LAS glass-ceramic could either have a flat CTE-T curve or be hysteresis-free.

LAS glass-ceramics contain a negatively expanding crystalline phase, which advantageously comprises or consists of high-quartz solid solution, also called β-eucryptite, within the scope of the invention, and a positively expanding glass phase. Besides $SiO_2$ and $Al_2O_3$, $Li_2O$ is a main component of the high-quartz solid solution. If present, ZnO and/or MgO are also incorporated into the high-quartz solid solution phase, and together with $Li_2O$ influence the expansion behavior of the crystalline phase. This means that through the above-mentioned specifications according to the invention (reduction, preferably exclusion of MgO and ZnO), a significant influence is exerted on the type and properties of the high-quartz solid solution formed during ceramization. In the context of US 2022/0298079 A1, US 2022/0298062 A1 and WO2022/194846 A1, to adjust the desired expansion behavior of the glass-ceramic, MgO and ZnO were not used, but rather at least one component selected from the group consisting of $P_2O_5$, $R_2O$, where $R_2O$ can be $Na_2O$ and/or $K_2O$ and/or $Rb_2O$ and/or $Cs_2O$, and RO, where RO can be CaO and/or BaO and/or SrO, was used. Unlike MgO and ZnO, the mentioned alkaline earth metal oxides and alkali metal oxides, if present, remain in the glass phase and are not incorporated into the high-quartz solid solution.

In an advantageous further development, the glass-ceramic can comprise the following components individually or in any combination in mol%:

| | |
|---|---|
| $Al_2O_3$ | 10 to 22 |
| $P_2O_5$ | 0.1 to 6 |
| MgO | 0 to 0.35 |
| ZnO | 0 to 0.4 |
| $R_2O$ | 0.7 to 2.0 |
| RO | 0.1 to 6 |
| $TiO_2+ZrO_2$ | 1.5 to 6 |

In an advantageous further development, the glass-ceramic can comprise the following components individually or in any combination in mol%:

| | |
|---|---|
| $Al_2O_3$ | 10 to 22 |
| $P_2O_5$ | 0.1 to 6 |
| MgO | 0 to 0.3 |
| ZnO | 0 to 0.4 |
| $R_2O$ | 0.7 to 2.0 |
| RO | 0.1 to 6 |
| $TiO_2+ZrO_2$ | 1.5 to 6 |

Furthermore, preferably within the above-mentioned limits for the sums $R_2O$, RO and $TiO_2+ZrO_2$, the following components can be contained individually or in any combination in mol%:

| | |
|---|---|
| $Na_2O$ | 0 to < 0.4 |
| $K_2O$ | 0.5 to 2.0 |
| $Cs_2O$ | 0 to 2 |
| $Rb_2O$ | 0 to 2 |
| CaO | 0.1 to 5 |
| BaO | 0 to 0.4 |
| SrO | 0 to 3 |
| $TiO_2$ | 0 to 5 |
| $ZrO_2$ | 0 to 3 |

In an advantageous embodiment, the LAS glass-ceramic comprises (in mol% based on oxide):

| | |
|---|---|
| $Al_2O_3$ | 10 to 22 |
| $P_2O_5$ | 0.1 to 6 |

(continued)

| | |
|---|---|
| MgO | 0 to 0.35 |
| ZnO | 0 to 0.5 |
| R$_2$O | 0.7 to 2.0 |
| RO | 0.1 to 6 |
| Nucleating agents | 1.5 to 6, |

where nucleating agents are preferably TiO$_2$ and/or ZrO$_2$.

In an advantageous embodiment, the LAS glass-ceramic comprises (in mol% based on oxide):

| | |
|---|---|
| Al$_2$O$_3$ | 10 to 22 |
| P$_2$O$_5$ | 0.1 to 6 |
| MgO | 0 to 0.3 |
| ZnO | 0 to 0.4 |
| R$_2$O | 0.7 to 2.0 |
| RO | 0.1 to 6 |
| Nucleating agents | 1.5 to 6, |

where nucleating agents are preferably TiO$_2$ and/or ZrO$_2$.

In another advantageous embodiment, the LAS glass-ceramic comprises (in mol% based on oxide):

| | |
|---|---|
| SiO$_2$ | 60.50 to 69 |
| Li$_2$O | 8 to 9.4 |
| Al$_2$O$_3$ | 11 to 21 |
| P$_2$O$_5$ | 0.5 to 6 |
| MgO | 0 to 0.2 |
| ZnO | 0 to 0.3 |
| R$_2$O | 0.7 to 2.0 |
| RO | 0.2 to 4.5 |
| Nucleating agents | 2.5 to 5, |

where nucleating agents are preferably TiO$_2$ and/or ZrO$_2$.

The glass-ceramic contains a proportion of silicon dioxide (SiO$_2$) of at least 60 mol%, more preferably at least 60.5 mol%, further preferably at least 61 mol%, further preferably at least 61.5 mol%, further preferably at least 62.0 mol%. The proportion of SiO$_2$ is at most 70 mol% or less than 70 mol%, preferably at most 69 mol%, also preferably at most 68.5 mol%. With larger proportions of SiO$_2$, the batch is more difficult to melt, and the viscosity of the melt is higher, which can lead to problems in homogenizing melts in large-scale production facilities. Therefore, a content of 70 mol% should not be exceeded. If the viscosity of a melt is high, the processing temperature Va of the melt increases. Very high temperatures are required for the refining and homogenization of the melt, which, however, lead to the linings of the melting units being attacked due to the increasing aggressiveness of the melt with temperature. In addition, even higher temperatures may not be sufficient to produce a homogeneous melt, resulting in the green glass potentially having striae and inclusions (particularly bubbles and particles originating from the lining of the melting units), so that after ceramization, the requirements for the homogeneity of the properties of the produced glass-ceramic, for example the homogeneity of the thermal expansion coefficient, are not met. Lower SiO$_2$ contents than the mentioned upper limit may be preferred for this reason.

The proportion of Al$_2$O$_3$ is advantageously at least 10 mol%, preferably at least 11 mol%, preferably at least 12 mol%, more preferably at least 13 mol%, also preferably at least 14 mol%, also preferably at least 14.5 mol%, further preferably at least 15 mol%. If the content is too low, no or too little low-expanding solid solution forms. The proportion of Al$_2$O$_3$ is advantageously at most 22 mol%, preferably at most 21 mol%, preferably at most 20 mol%, further preferably at most 19.0 mol%, more preferably at most 18.5 mol%. Too high an Al$_2$O$_3$ content leads to increased viscosity and promotes uncontrolled devitrification of the material.

According to a variant of LAS glass-ceramics with an Al$_2$O$_3$ content of less than 17.0 mol%, it is advantageous for a CTE plateau that one or more of the following conditions are met:

- the $Al_2O_3$ content is at least 15.0 mol% or at least 15.8 mol% or at least 16.0 mol% or at least 16.1 mol% or more than 16.1 mol%,
- the $SiO_2$ content is at least 63.5 mol% or at least 63.75 mol% or at least 64.0 mol%, and/or at most 65.6 mol% or at most 65.0 mol%,
- the following applies: $30.7 \leq$ (molar content $SiO_2$ - (2.0 × molar content $Al_2O_3$)) or $30.9 \leq$ (molar content $SiO_2$ - (2.0 × molar content $Al_2O_3$)) or $31.0 \leq$ (molar content $SiO_2$ - (2.0 × molar content $Al_2O_3$)),
- the following applies: (molar content $SiO_2$ - (2.0 × molar content $Al_2O_3$)) $\leq 34.0$.

According to another variant of LAS glass-ceramics with $Al_2O_3 \geq 17.0$ mol%, it is advantageous for a CTE plateau that one or more of the following conditions are met:

- the $Al_2O_3$ content is at most 19.5 mol% or at most 19.0 mol%,
- the $SiO_2$ content is at least 62.0 mol%, or more than 62.0 mol%, and/or at most 66.0 mol%,
- the following applies: $142.5 \leq$ (molar content $SiO_2$ + (4.6 × molar content $Al_2O_3$)) or $143.0 \leq$ (molar content $SiO_2$ + (4.6 × molar content $Al_2O_3$)) or $143.0 <$ (molar content $SiO_2$ + (4.6 × molar content $Al_2O_3$)),
- one of the following conditions applies:

    ○ (molar content $SiO_2$ + (4.6 × molar content $Al_2O_3$)) $\leq 149.0$, or
    ○ (molar content $SiO_2$ + (2.0 × molar content $Al_2O_3$)) $\leq 101.0$ or $\leq 100.5$.

According to one variant, the following applies:

- $Al_2O_3 \geq 17.0$ mol% or $\leq 19.0$ and
- $SiO_2$ 62.0 mol% - 66.0 mol% and
- the following applies $142.5 \leq$ (molar content $SiO_2$ + (4.6 × molar content $Al_2O_3$)) $\leq 149.0$.

Within the scope of the invention, it was found that for largely ZnO and MgO-free hysteresis-free glass-ceramics, the $SiO_2$ - $Al_2O_3$ ratio mentioned in DE 10 2028 11 144 A1 is desirable but not sufficient on its own. Surprisingly, it was found that for hysteresis-free glass-ceramics that should exhibit a CTE plateau, the alkali metal oxides $Na_2O$ and especially $K_2O$ play a major role. While according to DE 10 2028 11 144 A1, the sum of sodium oxide ($Na_2O$) and/or potassium oxide ($K_2O$) is between 0.1 to 0.7 mol% and according to other embodiments can even be zero, for hysteresis-free glass-ceramics, a total content $R_2O$ (with R = Na, K and/or Cs) of > 0.7 mol% must be maintained in order to obtain a CTE plateau.

The glass-ceramic according to the invention can contain 0 to 6 mol% $P_2O_5$. The phosphate content $P_2O_5$ of the glass-ceramic can advantageously be at least 0.1 mol%, preferably at least 0.3 mol%, preferably at least 0.5 mol%, also preferably at least 0.6 mol%, more preferably at least 0.7 mol%, further preferably at least 0.8 mol%. $P_2O_5$ is essentially incorporated into the crystal phase of the glass-ceramic and positively influences the expansion behavior of the crystal phase and thus of the glass-ceramic. In addition, melting of the components and refining behavior of the melt are improved. However, if too much $P_2O_5$ is contained, the course of the CTE-T curve in the temperature range 0°C to 50°C does not show an advantageous flat course. Therefore, advantageously a maximum of 6 mol%, preferably a maximum of 5 mol%, more preferably at most 4 mol%, further preferably less than 4 mol% of $P_2O_5$ should be contained in the glass-ceramic. According to individual embodiments, the glass-ceramics can be free of $P_2O_5$.

Within the scope of the invention, certain sums and ratios of the components $SiO_2$, $Al_2O_3$ and/or $P_2O_5$, i.e. the components that form the high-quartz solid solution, can be conducive to the formation of a glass-ceramic according to the invention.

The total proportion in mol% of the basic components of the LAS glass-ceramic $SiO_2$ + $Al_2O_3$ is advantageously at least 75 mol%, preferably at least 78 mol%, preferably at least 79 mol%, more preferably at least 80 mol% and/or preferably at most 90 mol%, preferably at most 87 mol%, preferably at most 86 mol%, more preferably at most 85 mol%. If this sum is too high, the viscosity curve of the melt is shifted to higher temperatures, which is disadvantageous, as already explained above in connection with the component $SiO_2$. If the sum is too low, too little high-quartz solid solution forms.

The total proportion in mol% of the basic components of the LAS glass-ceramic $SiO_2$, $Al_2O_3$ and $P_2O_5$ is preferably at least 77 mol%, advantageously at least 81 mol%, advantageously at least 83 mol%, more preferably at least 84 mol% and/or preferably at most 91 mol%, advantageously at most 89 mol%, more preferably at most 87 mol%, according to one variant at most 86 mol%.

The ratio of the mol% proportions of $P_2O_5$ to $SiO_2$ is preferably at least 0.005, advantageously at least 0.01, preferably at least 0.012 and/or preferably at most 0.1, more preferably at most 0.08, according to one variant at most 0.07.

As a further component, the glass-ceramic contains lithium oxide ($Li_2O$) in a proportion of at least 7 mol%, advantageously at least 7.5 mol%, preferably at least 8 mol%, particularly preferably at least 8.25 mol%. The proportion of $Li_2O$ is limited to at most 9.4 mol%, more preferably at most 9.35 mol%, further preferably at most or less than 9.3 mol%.

$Li_2O$ is a component of the high quartz solid solution phase and contributes significantly to the thermal expansion of the glass-ceramic. The mentioned upper limit of 9.4 mol% should not be exceeded, as otherwise glass-ceramics with negative thermal expansion coefficient CTE (0;50) result. If the content of $Li_2O$ is less than 7 mol%, too little high quartz solid solution forms and the CTE of the glass-ceramic remains positive.

According to one variant of the glass-ceramic, the composition can fulfill the condition molar content $SiO_2 + (5 \times$ molar content $Li_2O) \geq 106$ or preferably $\geq 106.5$, preferably molar content $SiO_2 + (5 \times$ molar content $Li_2O) \geq 107$ or $\geq 107.5$. Alternatively or additionally, for the condition "molar content $SiO_2 + (5 \times$ molar content $Li_2O$)", an advantageous upper limit of $\leq 115.5$ or of $\leq 114.5$ or of $\leq 113.5$ may apply.

The glass-ceramic can contain at least one alkaline earth metal oxide selected from the group consisting of CaO, BaO, SrO, where this group is collectively referred to as "RO". The components from the RO group essentially remain in the amorphous glass phase of the glass-ceramic and can be important for maintaining the zero expansion of the ceramized material. If the sum of CaO+BaO+SrO is too high, the CTE (0;50) targeted according to the invention is not achieved. Therefore, the proportion of RO is advantageously at most 6 mol% or at most 5.5 mol%, preferably at most 5 mol%, advantageously at most 4.5 mol%, preferably at most 4 mol%, preferably at most 3.8 mol%, further preferably at most 3.5 mol%, also preferably at most 3.2 mol%. If the glass-ceramic contains RO, an advantageous lower limit can be at least 0.1 mol%, advantageously at least 0.2 mol%, preferably at least 0.3 mol%, also preferably at least 0.4 mol%. According to individual embodiments, the glass-ceramics can be free of RO.

According to one variant, the glass-ceramic contains only a small proportion of the component BaO in a proportion of at most < 0.5 mol%, preferably at most 0.3 mol%, more preferably at most 0.1 mol%. Some variants of the glass-ceramic contain no BaO, i.e. they are BaO-free apart from usual impurities. If BaO is contained, at least 0.1 mol%, or at least 0.2 mol% can be contained. Surprisingly, LAS glass-ceramics could be produced that exhibit good processing properties, particularly good polishability and post-processability with IBF, even with only a small proportion or even without the good glass former BaO.

CaO is the preferred RO component according to the invention, the LAS glass-ceramic preferably contains at least 0.1 mol% or at least 0.2 mol% or at least 0.4 mol% or at least 0.5 mol% CaO. The proportion of CaO can preferably be at most 5 mol%, advantageously at most 4 mol%, advantageously at most 3.5 mol%, advantageously at most 3 mol%, further preferably at most 2.8 mol%, more preferably at most 2.6 mol%.

The glass-ceramic can contain SrO in a proportion of at most 3 mol%, advantageously at most 2 mol%, preferably at most 1.5 mol%, preferably at most 1.3 mol%, preferably at most 1.1 mol%, more preferably at most 1 mol%, also preferably at most 0.9 mol% and/or preferably at least 0.1 mol%. According to individual embodiments, the glass-ceramics are free of SrO except for impurities.

The glass-ceramic can contain a maximum of 0.4 mol% magnesium oxide (MgO). A further advantageous upper limit can be a maximum of 0.2 mol%, a maximum of 0.1 mol% or a maximum of 0.05 mol%. Particularly preferably, the glass-ceramics according to the invention are free of MgO. The component MgO causes thermal hysteresis in the glass-ceramic in the temperature range of 0°C to 50°C. The less MgO contained in the glass-ceramic, the smaller the hysteresis in the mentioned temperature range.

The glass-ceramic can contain a maximum of 0.4 mol% zinc oxide (ZnO). A further advantageous upper limit can be a maximum of 0.2 mol%, a maximum of 0.1 mol% or a maximum of 0.05 mol%. Particularly preferably, the glass-ceramics according to the invention are free of ZnO. The component ZnO causes thermal hysteresis in the glass-ceramic in the temperature range of 0°C to 50°C. The less ZnO contained in the glass-ceramic, the smaller the hysteresis in the mentioned temperature range.

In total, MgO and ZnO should only be contained in a relatively small proportion in hysteresis-free LAS glass-ceramics, according to this invention in a total proportion of at most 0.4 mol% or at most 0.3 mol%. Preferred variants contain a maximum of 0.2 mol%, a maximum of 0.1 mol% or a maximum of 0.05 mol% or are free of MgO and ZnO.

Surprisingly, it was found that contrary to the teachings of the prior art, LAS glass-ceramics with a flat CTE-T curve or a CTE plateau can still be obtained, which are simultaneously zero-expanding and hysteresis-free. For this purpose, the proportion of alkali metal oxides in the LAS glass-ceramic is set to 0.7 mol% to 2.0 mol%. Contents of less than 0.7 mol% or more than 2.0 mol% lead to LAS glass-ceramics without or without a sufficiently wide CTE plateau.

The sum $R_2O$ of the contents of sodium oxide ($Na_2O$) and/or potassium oxide ($K_2O$) and/or cesium oxide ($Cs_2O$) and/or rubidium oxide ($Rb_2O$) is thus at least 0.7 mol% and at most 2.0 mol% or 1.9 mol% or 1.8 mol%, according to preferred variants at least 0.8 mol% or at least 0.9 mol% or at least 1.0 mol%. The components $Na_2O$, $K_2O$, $Cs_2O$ and $Rb_2O$ essentially remain in the amorphous glass phase of the glass-ceramic and are important for maintaining the zero expansion of the ceramized material.

$Na_2O$, $K_2O$, $Cs_2O$, $Rb_2O$ can each and independently of each other be contained in the glass-ceramic in a proportion of at least 0.1 mol% or at least 0.2 mol% or at least 0.3 mol% or at least 0.4 mol% or at least 0.5 mol%, and/or at most 2.0 mol% or at most 1.5 mol% or at most 1.0 mol% or at most 0.5 mol% or at most 0.4 mol%.

According to a preferred variant, the LAS glass-ceramic contains exclusively or predominantly $K_2O$ as alkali metal oxide. It was surprisingly found that larger amounts of $K_2O$, i.e. a proportion of at least 0.7 mol% or at least 0.8 mol% or at least 0.9 mol% or at least 1.0 mol% or at least 1.1 mol% or at least 1.2 mol% or at least 1.3 mol% can be introduced into the LAS glass-ceramic without deteriorating the zero expansion of the LAS glass-ceramic. At the same time, the proportion of $K_2O$ ensures a flat CTE-T curve. Furthermore, $K_2O$ lowers the temperature $T_3$ and thus ensures better meltability and processability of the glass melt. According to this variant, $Na_2O$ is contained only in a proportion of at most 0.5 mol% or at most 0.2 mol% or at most 0.1 mol%. The LAS glass-ceramic can also be free of $Na_2O$ except for usual impurities, i.e. contain at most 0.05 mol% or 0.01 mol% $Na_2O$.

The proportion of $Cs_2O$ can be at most 2 mol% or at most 1.5 mol% or at most 1 mol% or at most 0.5 mol% or at most 0.1 mol%. The proportion of $Rb_2O$ can be at most 2 mol% or at most 1.5 mol% or at most 1 mol% or at most 0.5 mol% or at most 0.1 mol%.

According to individual embodiments, the glass-ceramics are free of $Na_2O$ and/or $Cs_2O$ and/or $Rb_2O$.

The glass-ceramic further contains at least one crystal nucleating agent selected from the group consisting of $TiO_2$, $ZrO_2$ $Ta_2O_5$, $Nb_2O_5$, $SnO_2$, $MoO_3$, $WO_3$. Nucleating agent can be a combination of two or more of the mentioned components. Another advantageous nucleating agent can be $HfO_2$. Therefore, in an advantageous embodiment, the glass-ceramic comprises $HfO_2$ and at least one crystal nucleating agent selected from the group consisting of $TiO_2$, $ZrO_2$ $Ta_2O_5$, $Nb_2O_5$, $SnO_2$, $MoO_3$, $WO_3$. The sum of the proportions of the nucleating agents is preferably at least 1.5 mol%, preferably at least 2 mol% or more than 2 mol%, more preferably at least 2.5 mol%, according to certain variants at least 3 mol%. An upper limit can be at most 6 mol%, preferably at most 5 mol%, preferably at most 4.5 mol% or at most 4 mol%. In particularly advantageous variants, the mentioned upper and lower limits apply to the sum of $TiO_2$ and $ZrO_2$.

The glass-ceramic can contain titanium oxide ($TiO_2$) preferably with a proportion of at least 0.1 mol%, advantageously at least 0.5 mol%, preferably at least 1.0 mol%, preferably at least 1.5 mol%, preferably at least 1.8 mol% and/or preferably at most 5 mol%, advantageously at most 4 mol%, more preferably at most 3 mol%, further preferably at most 2.5 mol%, preferably 2.3 mol%. $TiO_2$-free variants of the glass-ceramic according to the invention are possible.

The glass-ceramic can advantageously further contain zirconium oxide ($ZrO_2$) in a proportion of at most 3 mol%, preferably at most 2.5 mol%, more preferably at most 2 mol%, preferably at most 1.5 mol% or at most 1.2 mol%. Preferably, $ZrO_2$ can be contained in a proportion of at least 0.1 mol%, more preferably at least 0.5 mol%, at least 0.8 mol% or at least 1.0 mol%. $ZrO_2$-free variants of the glass-ceramic according to the invention are possible.

According to some advantageous variants of the invention, 0 to 5 mol% of $Ta_2O_5$ and/or $Nb_2O_5$ and/or $SnO_2$ and/or $MoO_3$ and/or $WO_3$ can be contained individually or in total in the glass-ceramic and can serve, for example, as alternative or additional nucleating agents or for modulating the optical properties, e.g. refractive index. $HfO_2$ can also be an alternative or additional nucleating agent. To modulate the optical properties, some advantageous variants can contain, for example, $Gd_2O_3$, $Y_2O_3$, $HfO_2$, $Bi_2O_3$ and/or $GeO_2$.

The glass-ceramic can further contain one or more usual refining agents, selected from the group consisting of $As_2O_3$, $Sb_2O_3$, $SnO_2$, $SO_4^{2-}$, $Cl^-$, $Br^-$, or a mixture thereof, in a proportion of more than 0.05 mol% or at least 0.1 mol% and/or at most 1 mol%.

In order to provide a hysteresis-free and zero-expanding glass-ceramic according to the invention despite the reduced $As_2O_3$ content or even without the use of $As_2O_3$ in the desired internal quality, particularly with low bubble count and few striae, at least one chemical refining agent is used in an advantageous embodiment.

In an advantageous embodiment, the glass-ceramic can contain, as a chemical refining agent instead of $As_2O_3$ or in addition to the small proportion of $As_2O_3$ (maximum 0.05 mol%), at least one alternative redox refining agent and/or at least one evaporation refining agent and/or at least one decomposition refining agent. Since $As_2O_3$ is also a redox refining agent, redox refining agents that are used alternatively or in addition to $As_2O_3$ are referred to as "alternative redox refining agents" within the scope of the invention.

In an advantageous variant, the total content of detectable chemical refining agents in the glass-ceramic (excluding the content of $As_2O_3$ - if $As_2O_3$ is present in the glass-ceramic) can be in the range of 0 mol% to 1 mol%. In an advantageous embodiment, the total content of detectable refining agents in the glass-ceramic (excluding $As_2O_3$) is more than 0.01 mol%, preferably at least 0.05 mol%, preferably at least 0.1 mol%, preferably at least 0.15 mol%, advantageously at least 0.2 mol% and/or at most 1 mol%, preferably at most 0.7 mol%, preferably at most 0.5 mol%, preferably at most 0.4 mol%. Some advantageous variants may also contain at most 0.3 mol%, preferably at most 0.25 mol% or at most 0.2 mol% of refining agent. The proportions of the respective components are detectable in an analysis of the glass-ceramic. This applies in particular to all refining agents mentioned below, with the exception of the described sulfate component.

Redox refining agents contain multivalent or polyvalent ions that can occur in at least two oxidation states, which are in a temperature-dependent equilibrium with each other, whereby at high temperatures a gas, usually oxygen, is released. Certain multivalent metal oxides can therefore be used as redox refining agents. In an advantageous variant, the alternative redox refining agent can be at least one component selected from the group consisting of $Sb_2O_3$, $SnO_2$, $CeO_2$, $MnO_2$, $Fe_2O_3$. In principle, however, other redox compounds are also suitable if they release their refining gas in the temperature range relevant for refining and either transition into an oxide with a different valence state of the metal ion or into a metallic form. Numerous such compounds are described, for example, in DE 19939771 A. Preferred is an alternative redox refining agent that releases refining gas, especially oxygen, at a temperature of less than 1700°C, such as $Sb_2O_3$, $SnO_2$, $CeO_2$.

Through an analysis of the glass-ceramic, the content of $As_2O_3$ and/or the content of at least one alternative redox refining agent can be determined, from which experts can draw conclusions about the type and amount of refining agent used. The alternative redox refining agents can be added to the batch, for example, as oxides.

In an advantageous variant, the total content of alternative redox refining agents can be in the range of 0 mol% to 1 mol%. In an advantageous embodiment, the total content of alternative redox refining agents detectable in the glass-ceramic is more than 0.01 mol%, preferably at least 0.05 mol%, preferably at least 0.1 mol%, preferably at least 0.15 mol%, advantageously at least 0.2 mol% and/or at most 1 mol%, preferably at most 0.7 mol%, preferably at most 0.5 mol%, preferably at most 0.4 mol%. Some advantageous variants may also contain at most 0.3 mol%, preferably at most 0.25 mol% or at most 0.2 mol% of alternative redox refining agent.

The glass-ceramic can contain 0 mol% to 1 mol% antimony oxide ($Sb_2O_3$) as an alternative redox refining agent. In an advantageous embodiment, the glass-ceramic contains $Sb_2O_3$ in a proportion of more than 0.01 mol%, preferably at least 0.05 mol%, advantageously at least 0.1 mol%, advantageously at least 0.15 mol%, preferably at least 0.2 mol% and/or preferably at most 1 mol%, advantageously at most 0.7 mol%, more preferably at most 0.5 mol%, further preferably at most 0.4 mol%, preferably at most 0.3 mol%. Since $Sb_2O_3$ is considered environmentally hazardous, it may be advantageous to use as little $Sb_2O_3$ as possible for refining. A preferred embodiment of the glass-ceramic is substantially $Sb_2O_3$-free or Sb-free, where "substantially $Sb_2O_3$-free" means that $Sb_2O_3$ is not intentionally added to the composition as a raw material component, but is at most contained as an impurity, with an impurity limit for $Sb_2O_3$-free glass-ceramics being at most 0.01 mol%, preferably at most 0.005 mol%. According to specific embodiments, the glass-ceramic is $Sb_2O_3$-free.

The glass-ceramic can contain 0 mol% to 1 mol% tin oxide ($SnO_2$) as an alternative redox refining agent. In an advantageous embodiment, the glass-ceramic contains $SnO_2$ in a proportion of more than 0.01 mol%, preferably at least 0.05 mol%, advantageously at least 0.1 mol%, advantageously at least 0.15 mol%, preferably at least 0.2 mol%, preferably at least 0.3 mol% and/or preferably at most 1 mol%, advantageously at most 0.7 mol%, more preferably at most 0.6 mol%. For some variants, an upper limit of at most 0.5 mol%, further preferably at most 0.4 mol%, preferably at most 0.3 mol% may be advantageous. If the content of $SnO_2$ is too high, it may be possible that the ceramization process of the green glass is more difficult to control, as $SnO_2$ at higher contents acts not only as a refining agent but also as a crystal nucleating agent. $SnO_2$-free or Sn-free variants of the glass-ceramic according to the invention are possible and advantageous, i.e. no Sn-containing raw material was added to the batch for refining the underlying green glass, with a limit for impurities of $SnO_2$ introduced by raw materials or the process being at most 0.01 mol%, preferably at most 0.005 mol%.

The glass-ceramic can contain 0 mol% to 1 mol% $CeO_2$ and/or $MnO_2$ and/or $Fe_2O_3$ as alternative redox refining agents. These components can each and independently of each other preferably be contained in a proportion of more than 0.01 mol%, preferably at least 0.05 mol%, advantageously at least 0.1 mol%, advantageously at least 0.15 mol%, preferably at least 0.2 mol% and/or preferably at most 1 mol%, advantageously at most 0.7 mol%, more preferably at most 0.5 mol%, further preferably at most 0.4 mol%, preferably at most 0.3 mol%. Preferred variants of the glass-ceramic are free of $CeO_2$ and/or $MnO_2$ and/or $Fe_2O_3$, i.e. no Ce-containing raw material and/or Mn-containing raw material and/or Fe-containing raw material was added to the batch for refining the underlying green glass, with a limit for impurities of $CeO_2$ and/or $MnO_2$ and/or $Fe_2O_3$ introduced by raw materials or the process being at most 0.01 mol%, preferably at most 0.005 mol%.

Evaporation refining agents are components that are volatile at high temperatures due to their vapor pressure, so that the gas formed in the melt develops a refining effect.

In an advantageous variant, the evaporation refining agent can contain a halogen component.

In an advantageous variant, the evaporation refining agent can comprise at least one halogen with refining effect, particularly selected from the group consisting of chlorine (Cl), bromine (Br) and iodine (I). The preferred halogen with refining effect is chlorine. Fluorine is not a halogen with refining effect, as it is already volatile at too low temperatures. The glass-ceramic can nevertheless contain fluorine. However, fluorine can reduce the transparency of the glass-ceramic, so that this component, if present, is preferably limited to a maximum of 0.5 mol%, preferably a maximum of 0.3 mol%, preferably a maximum of 0.1 mol%. Preferably, the glass-ceramic is free of fluorine.

The halogen with refining effect can be added in different forms. In one embodiment, it is added to the batch as a salt with an alkali metal cation or alkaline earth metal cation or as aluminum halogen. In one embodiment, the halogen is used as a salt and the cation in the salt corresponds to a cation present as an oxide in the glass-ceramic. The halogen with refining effect can be used in the form of a halogen compound, particularly a halide compound. Suitable halide compounds are particularly salts of chlorine anions, bromine anions and/or iodine anions with alkali metal cations or alkaline earth metal cations or aluminum cations. Preferred examples are chlorides such as LiCl, NaCl, KCl, $CaCl_2$, $BaCl_2$, $SrCl_2$, $AlCl_3$ and combinations thereof. Corresponding bromides and iodides such as LiBr, LiI, NaBr, NaI, KBr, KI, $CaI_2$, $CaBr_2$ and combinations thereof are also possible. Other examples are $BaBr_2$, $BaI_2$, $SrBr_2$, $SrI_2$ and combinations thereof.

In an advantageous variant, the total content of halogen with refining effect (i.e. Cl and/or Br and/or I) can be in the range of 0 mol% to 1 mol%. In an advantageous embodiment, the total content of halogen with refining effect that is detectable in the glass-ceramic is more than 0.03 mol%, preferably at least 0.04 mol%, preferably at least 0.06 mol%, preferably at least 0.08 mol%, preferably at least 0.1 mol%, preferably at least 0.15 mol%, advantageously at least 0.2 mol% and/or at most 1 mol%, preferably at most 0.7 mol%, preferably at most 0.5 mol%, preferably at most 0.4 mol%. Some advantageous variants may also contain at most 0.3 mol%, preferably at most 0.25 mol% or at most 0.2 mol% of halogen with refining effect. The mentioned contents refer to the amounts of halogen detectable in the glass-ceramic. It is common for experts to calculate the amount of halogen or halide compound needed for refining based on these specifications.

The glass-ceramic can contain 0 mol% to 1 mol% chlorine (determined and specified atomically as Cl). In an advantageous embodiment, the glass-ceramic contains Cl with a proportion of more than 0.03 mol%, advantageously at least 0.04 mol%, advantageously at least 0.05 mol%, advantageously at least 0.1 mol%, advantageously at least 0.15 mol%, preferably at least 0.2 mol% and/or preferably at most 1 mol%, advantageously at most 0.7 mol%, more preferably at most 0.5 mol%, further preferably at most 0.4 mol%, preferably at most 0.3 mol%. Some advantageous glass-ceramics can be Cl-free, i.e. no Cl-containing raw material was added to the batch for refining the underlying green glass. Cl is present at most as an impurity, with the limit for a Cl impurity being at most 0.03 mol%.

The same mentioned ranges and limits apply to Br as a halogen with refining effect. The same mentioned ranges and limits apply to I as a halogen with refining effect. Preferred variants of the glass-ceramic are free of Br and/or I.

Alternatively or in addition to an evaporation refining agent and/or an alternative redox refining agent, the chemical refining agent can contain at least one decomposition refining agent. A decomposition refining agent is an inorganic compound that decomposes at high temperatures with the release of refining gas and the decomposition product has a sufficiently large gas pressure, particularly greater than $10^5$ Pa. Preferably, the decomposition refining agent can be a salt that contains an oxo anion, particularly a sulfate component. Preferably, the decomposition refining agent comprises a sulfate component. Through decomposition of the component added as sulfate, $SO_2$ and $O_2$ gas are released at high temperatures, which contribute to the refining of the melt.

A sulfate component can be added in different forms. In one embodiment, it is added to the batch as a salt with an alkali metal or alkaline earth metal cation. In one embodiment, the sulfate is used as a salt and the cation in the salt corresponds to a cation present as an oxide in the glass-ceramic. For example, the following components can be advantageously used as a sulfate source: $Li_2SO_4$, $Na_2SO_4$, $K_2SO_4$, $CaSO_4$, $BaSO_4$, $SrSO_4$.

Within the scope of the invention, sulfate is determined as $SO_3$ in material analysis. However, since LAS glass-ceramics have only a very low solubility for sulfate, the sulfate component (i.e. $SO_3$) is no longer detectable in the melt product with conventional X-ray fluorescence analysis after melting. Therefore, for sulfate-refined embodiments (see below), it is specified how many mol% $SO_4^{2-}$ or mol% $SO_3$ were used in relation to the synthesis of the glass melt. That a sulfate component was used as a refining agent can be determined, for example, by analyzing the residual gas content ($SO_2$) in the glass-ceramic.

An advantageous glass-ceramic that is refined with a sulfate component was added more than 0.01 mol%, preferably at least 0.05 mol%, advantageously at least 0.1 mol%, advantageously at least 0.15 mol%, preferably at least 0.2 mol% and/or preferably at most 1 mol%, advantageously at most 0.7 mol%, more preferably at most 0.5 mol%, further preferably at most 0.4 mol%, preferably at most 0.3 mol% $SO_3$ via at least one corresponding sulfate compound during synthesis. Sulfate-free (i.e. $SO_3$-free or $SO_4^{2-}$-free) refined glass-ceramics are possible and advantageous. The proportion of refining-effective sulfate added in the synthesis of a glass-ceramic can thus be in the range of 0 mol% to 1 mol% $SO_3$.

According to a variant of the invention, the glass-ceramic or the underlying glass can be refined using a suitable metal sulfide as a decomposition refining agent, as described for example in US 2011/0098171 A. In one embodiment, the cation in the sulfide corresponds to a cation present as an oxide in the glass-ceramic. Examples of suitable metal sulfides are alkali metal sulfide, alkaline earth metal sulfide and/or aluminum sulfide, which release $SO_3$ in the melt under oxidizing conditions. For a metal sulfide to fulfill the role of a refining agent well, it is advantageously used in combination with an oxidizing agent, preferably a nitrate, and/or sulfate.

Advantageous glass-ceramics with reduced $As_2O_3$ content or advantageous $As_2O_3$-free glass-ceramics can have a combination of chemical refining agents. The following combinations can be advantageous, with the respective glass-ceramic preferably containing the mentioned refining agents within the above-mentioned limits for the individual components and/or the sums. Advantageous embodiments include:

- $SnO_2$ and/or $Sb_2O_3$ each with max. 0.05 mol% $As_2O_3$; or

- $As_2O_3$-free combinations such as: $Sb_2O_3$ with $SnO_2$; $Sb_2O_3$ with Cl, $Sb_2O_3$ with $SO_3$; or

- $As_2O_3$-free and $Sb_2O_3$-free combinations such as: $SnO_2$ with Cl, $SnO_2$ with $SO_3$, Cl with $SO_3$.

Alternatively, glass-ceramics refined with only one refining agent can also be advantageous, e.g. glass-ceramics that contain only $Sb_2O_3$ or only $SnO_2$ as a refining agent.

Alternatively or in addition to the above-described refining of the melt with chemical refining agents, whose principle consists in the addition of compounds that decompose and release gases or that are volatile at higher temperatures or that release gases in an equilibrium reaction at higher temperatures, known physical refining processes can also be advantageously used, such as lowering the viscosity of the glass melt by increasing temperature, vacuum refining, high-pressure refining, etc.

In an advantageous variant of the invention, the batch can contain nitrates ($NO_3$) that act as oxidizing agents in the melting and refining process and ensure that oxidizing conditions are present in the melt to increase the effectiveness of the refining agents used, especially the alternative redox refining agents. In one embodiment, the nitrate is used as a salt and the cation in the salt corresponds to a cation present as an oxide in the glass-ceramic. Examples of this are: aluminum nitrate, alkali metal nitrate, alkaline earth metal nitrate, zirconium nitrate. However, ammonium nitrate can also advantageously serve as a nitrate source. A nitrate compound or a mixture of several nitrate compounds can be used. If a nitrate compound or a mixture of nitrate compounds is/are contained in the batch to support the refining process, the sum of $NO_3^-$ is preferably at least 0.4 mol%, preferably at least 0.5 mol%, preferably at least 0.8 mol%, preferably at least 1 mol% and/or advantageously at most 5 mol%, preferably at most 4 mol%. For some advantageous variants, at most 3 mol% nitrate can also be used. Due to volatility, no nitrate can be detected in the glass or in the glass-ceramic.

The above glass compositions may contain additions of coloring oxides, such as $Nd_2O_3$, $Fe_2O_3$, $CoO$, $NiO$, $V_2O_5$, $MnO_2$, $CuO$, $CeO_2$, $Cr_2O_3$, rare earth oxides in contents of 0 to 3 mol% each individually or in total. Preferred variants are free of coloring oxides.

$B_2O_3$ can negatively affect the transparency of the glass-ceramic. Therefore, the content of this component in an advantageous variant is limited to < 0.2 mol%, preferably at most 0.1 mol%. Preferred variants are free of $B_2O_3$.

The LAS glass-ceramic is preferably fluorine-free. Fluorine can reduce the transparency of the glass-ceramic and negatively affect the zero expansion. This component, if it should be present, is preferably limited to a maximum of 0.5 mol%, preferably a maximum of 0.3 mol%, preferably a maximum of 0.1 mol%. Preferably, the glass-ceramic is free of fluorine.

According to an advantageous embodiment of the present invention, the composition is free of components not mentioned above.

According to an advantageous embodiment of the present invention, the glass-ceramic according to the invention or the green glass preferably consists of at least 90 mol%, more preferably at least 95 mol%, most preferably at least 99 mol% of the above-mentioned components or preferably of the components $SiO_2$, $Al_2O_3$, $Li_2O$, $P_2O_5$, $R_2O$, $RO$ and nucleating agents.

According to an advantageous further development of the glass-ceramic, it is substantially free of one glass component, or several glass components selected from the group consisting of $PbO$, $CrO_3$ and $Cd$ compounds.

According to the invention, the expression "X-free" or "free of a component X" means that the glass-ceramic essentially does not contain this component X, i.e. that such a component is present at most as an impurity in the glass but is not added to the composition as an individual component. With regard to impurities, particularly with $MgO$ and/or $ZnO$, a limit of 0.03 mol%, preferably 0.01 mol%, should not be exceeded for MgO-free and/or ZnO-free variants, referring to each individual component. For other glass components, higher impurity contents up to a maximum of 0.1 mol%, preferably a maximum of 0.05 mol%, advantageously a maximum of 0.01 mol%, advantageously a maximum of 0.005 mol%, for some components advantageously a maximum of 0.003 mol% referring to each component, may be possible. X here stands for any component, such as $PbO$.

The glass-ceramics according to the invention have high-quartz solid solution as the main crystal phase. Main crystal phase is the crystalline phase that has the largest vol% share in the crystal phase. High-quartz solid solution is a metastable phase that changes its composition and/or structure or transforms into another crystal phase depending on the crystallization conditions. The high-quartz solid solution crystals exhibit very low or even decreasing thermal expansion with increasing temperature. In an advantageous embodiment, the crystal phase contains no β-spodumene and no keatite.

Advantageous embodiments of the LAS glass-ceramic have a crystal phase content of less than 70 vol% and/or advantageously more than 45 vol%. The crystal phase consists of high-quartz solid solution, which is also called β-eucryptite. The average crystallite size of the high-quartz solid solution is advantageously < 100 nm, preferably < 80 nm, preferably < 70 nm. The small crystallite size causes the glass-ceramic to be transparent and also to be better polishable. In certain advantageous variants, the average crystallite size of the high-quartz solid solution can be ≤ 60 nm, preferably ≤ 50 nm. The crystal phase, its proportion and the average crystallite size are determined in a known manner by X-ray diffraction analysis.

According to an embodiment of the present invention, a transparent glass-ceramic is produced. Due to the transparency, many properties of such a glass-ceramic, especially of course its internal quality, can be better assessed. The glass-ceramics according to the invention are transparent, i.e. they have a pure transmission of at least 70% in the wavelength range from 350 to 650 nm. $B_2O_3$ and/or higher contents of fluorine can reduce the transparency. Therefore, advantageous variants do not contain one or both of the mentioned components. Furthermore, the glass-ceramics produced within the scope of the invention are pore-free and crack-free. Within the scope of the invention, "pore-free" means a porosity of less than 1%, preferably less than 0.5%, more preferably less than 0.1%. A crack is a gap, i.e. discontinuity, in an otherwise continuous structure.

To enable the production of a homogeneous glass-ceramic in large-scale production facilities, it is advantageous if the processing temperature Va of the green glass underlying the glass-ceramic (and thus the glass-ceramic) is advantageously at most 1330°C, preferably at most 1320°C. Some advantageous variants may have a processing temperature of at most 1310°C or at most 1300°C or less than 1300°C or less than 1280°C or less than 1270°C. The processing temperature Va is the temperature at which the melt has a viscosity of $10^4$ dPas, it is therefore also referred to as temperature $T_4$. Accordingly, the temperature at which the melt has a viscosity of $10^3$ dPas is referred to as temperature $T_3$. Preferably, this temperature $T_3$ is at most 1480°C or at most 1460°C or at most 1450°C or at most 1440°C or at most 1435°C. Homogeneity refers in particular to the homogeneity of the CTE of the glass-ceramic over a large volume as well as a low number, preferably freedom from inclusions such as bubbles and particles. This is a quality feature of the glass-ceramic and a prerequisite for use in precision components, especially in very large precision components.

The processing temperature is determined by the composition of the glass-ceramic. Since especially the glass network-forming component $SiO_2$ is to be seen as the decisive component for increasing the viscosity and thus the processing temperature, the maximum $SiO_2$ content is to be chosen according to the above-mentioned specifications.

**Coefficient of thermal expansion CTE**

The glass-ceramics according to the invention are zero-expanding, i.e. they have a mean thermal expansion coefficient CTE in the range of 0 to 50°C of at most $0 \pm 0.02 \times 10^{-6}$/K. Some advantageous variants even have a mean CTE in the range of 0 to 50°C of at most $0 \pm 0.01 \times 10^{-6}$/K. For certain applications, it may be advantageous if the mean CTE in a larger temperature range, e.g. in the range of -30°C to +70°C, preferably in the range of -40°C to +80°C, is at most $0 \pm 0.02 \times 10^{-6}$/K, i.e. zero expansion is present.

To determine the CTE-T curve of the glass-ceramics and precision components according to the invention as well as the comparative examples, the differential CTE(T) is first determined. The differential CTE(T) is determined as a function of temperature. The CTE is then defined according to the following formula (1):

$$CTE\ (T) = (1\ /\ l_0) \times (\partial l\ /\ \partial T) \qquad (1)$$

To create an $l/l_0$-T curve or a strain curve or plot of the length change $l/l_0$ of a test specimen (glass-ceramic or precision component) against temperature, the temperature-dependent length change of the length of a test specimen from the initial length $l_0$ at the initial temperature $t_0$ to the length $l_t$ at temperature t can be measured. Preferably, small temperature intervals of for example 5°C or 3°C or 1°C are chosen to determine a measurement point. Such measurements can be carried out, for example, by dilatometric methods, interferometric methods, for example the Fabry-Perot method, i.e. the evaluation of the shift of the resonance peak of a laser beam coupled into the material, or other suitable methods. Within the scope of the invention, the dilatometric method with a temperature interval of 1°C on rod-shaped samples of the test specimens with 100 mm length and a diameter of 6 mm was chosen to determine the CTE. The chosen method for determining the CTE has an accuracy of preferably at least $\pm$ 0.05 ppm/K, preferably of at least $\pm$ 0.03 ppm/K. However, the CTE can of course also be determined with methods that have an accuracy of at least $\pm$ 0.01 ppm/K, preferably at least $\pm$ 0.005 ppm/K or according to some embodiments even of at least $\pm$ 0.003 ppm/K or at least $\pm$ 0.001 ppm/K.

From the $l/l_0$-T curve, the mean CTE for a specific temperature interval, for example for the temperature range from 0°C to 50°C, is calculated.

A CTE-T curve is obtained by differentiating the $l/l_0$-T curve. From the CTE-T curve, the zero crossing and the slope of the CTE-T curve within a temperature interval can be determined. Based on the CTE-T curve, the extent and position of an advantageous CTE plateau formed in some variants is determined (see below and for example Figures 1 and 2).

An advantageous embodiment of a precision component comprising a glass-ceramic according to the invention (particularly in the form of a substrate) has a high CTE homogeneity. The value of CTE homogeneity (in English: "total spatial variation of CTE") is understood to be the so-called peak-to-valley value, i.e. the difference between the highest and lowest CTE values of samples taken from a precision component. The CTE homogeneity thus does not refer to the CTE of the material of the component, but to the spatial variation of the CTE over the considered section or the entire precision component. To determine the CTE homogeneity, a large number of samples are taken from a precision component at different locations and the CTE value is determined for each, which is given in ppb/K, where 1 ppb/K = $0.001 \times 10^{-6}$/K. The CTE homogeneity, i.e. the spatial variation of the CTE, is advantageously at most 5 ppb/K over the entire precision component, preferably at most 4 ppb/K, most preferably at most 3 ppb/K. A method for determining the CTE homogeneity and measures for achieving the CTE homogeneity are described in WO 2015/124710 A, the disclosure content of which is fully incorporated into this application.

**Thermal Hysteresis**

Within the scope of the invention, the glass-ceramic exhibits a thermal hysteresis of < 0.1 ppm at least in the temperature range of 10°C to 35°C and is thus already considered hysteresis-free (see Figures 5 and 6). Thus, at any temperature within the temperature interval of 10°C to 35°C, after being subjected to a temperature change, the glass-ceramic shows an isothermal length change in positive or negative direction of less than 0.1 ppm at subsequent constant temperature, i.e. < |0.1 ppm| or < ± 0.1 ppm. Preferably, the LAS glass-ceramic exhibits a thermal hysteresis of < |0.08 ppm| or < |0.05 ppm| at least in the temperature range of 10°C to 35°C.

In advantageous embodiments, this hysteresis-free behavior is present at least in a temperature range of 5 to 35°C, preferably at least in the temperature range 5 to 45°C, preferably at least in the temperature range > 0°C to 45°C, preferably at least in the temperature range of -5°C to 50°C. Particularly preferably, the temperature range of hysteresis-free behavior is even wider, so that the material or component is also suitable for applications at temperatures up to at least 100°C and advantageously even above. Particularly preferably, the temperature range of hysteresis-free behavior is even wider. Preferred application temperatures are in the range -60 to 100°C, more preferably from - 40°C to +80°C. Special variants of the present invention concern glass-ceramics and precision components for application temperatures TA for example in the range 5°C to 20°C or TA of 22°C, 40°C, 60°C, 80°C and 100°C, which are preferably also hysteresis-free at these temperatures.

The thermal hysteresis was determined for the glass-ceramics and precision components according to the invention as well as for the comparative examples using a precision dilatometer, which can determine the CTE with a reproducibility of ± 0.001 ppm/K and ± 0.003 ppm/K absolute, with a temperature interval of 1°C on rod-shaped samples of the test specimens (i.e. sample of the precision component or sample of the glass-ceramic) with 100 mm length and a diameter of 6 mm, according to the method and apparatus setup disclosed in DE 10 2015 113 548 A, the disclosure content of which is fully incorporated into this application. For each sample examined, the length change l/l0 as a function of temperature was determined between 50°C cooling with a cooling rate of 36K/h to -10°C. After an isothermal holding time of 5 hours at -10°C, the sample was heated with a heating rate of 36K/h to 50°C and the length change l/l0 as a function of temperature was recorded. The thermal hysteresis behavior of a test specimen is considered at -5°C, 0°C, 5°C, 10°C, 22°C, 35°C, 40°C. These points are representative for the temperature range from -10°C to 50°C, as the hysteresis decreases with increasing temperature in the mentioned temperature interval. Thus, a sample that is hysteresis-free at 22°C or 35°C also shows no hysteresis in the range up to 50°C.

To determine the thermal hysteresis at 10°C, the individual measured values of the length change for the five temperatures 8°C, 9°C, 10°C, 11°C and 12°C, i.e. two temperature points above and below 10°C each, were recorded both during heating and cooling of the sample in the range -10°C to 50°C at a rate of 36K/h. The mean value was calculated from the differences of the measured values for heating curve and cooling curve at these five measurement points and listed as "Hyst.@10°C" in the unit [ppm] in the tables.

To determine the thermal hysteresis at 35°C, the individual measured values of the length change for the five temperatures 33°C, 34°C, 35°C, 36°C and 37°C, i.e. two temperature points above and below 35°C each, were recorded both during heating and cooling of the sample in the range -10°C to 50°C at a rate of 36K/h. The mean value was calculated from the differences of the measured values for heating curve and cooling curve of these five measurement points and listed as "Hyst.@35°C" in the unit [ppm] in the tables.

The same procedure was followed for the other temperature points mentioned above.

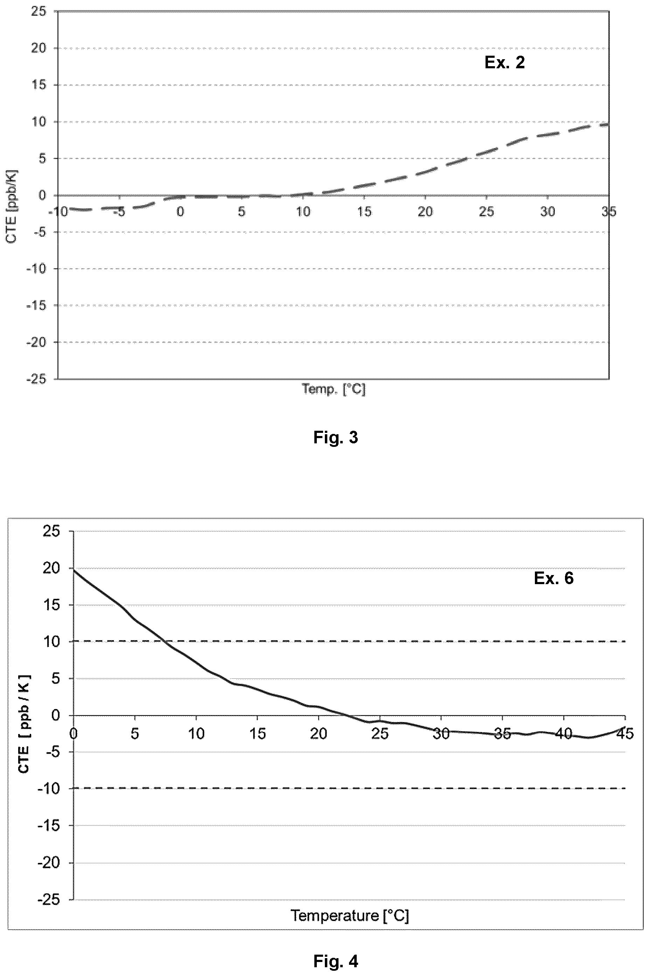

Figures 3, 4 and 14 show thermal hysteresis curves of glass-ceramics according to the invention. The cooling curves (dashed) and heating curves (dotted) overlap at least in the temperature range 10°C to 35°C, i.e. the glass-ceramics are hysteresis-free. However, the materials are not only hysteresis-free in the range 10°C to 35°C, but also at least in the range 5 to 35°C or 5 to 45°C, preferably at least in the range > 0°C to 45°C.

**Further Expansion Properties**

Advantageous embodiments of the invention exhibit further advantageous expansion characteristics:
To describe the expansion behavior of a test specimen (glass-ceramic or precision component), a TCL value is often given, where TCL stands for "Total Change of Length". Within the scope of the invention, the TCL value is given for the temperature range 0°C to 50°C or in the temperature range 0°C to 80°C or in the temperature range 0°C to 100°C. It is determined from the normalized $l/l_0$-T curve (also called $\Delta l/l_0$-T curve in the figures) of the respective test specimen, where "normalized" means that at 0°C the length change is 0 ppm. The $l/l_0$-T curve for TCL determination is created using the same method as described above in connection with CTE determination within the scope of the invention.

The TCL value is the distance between the highest $dl/l_0$ value and the lowest $dl/l_0$ value in this temperature range, here 0°C to 50°C:

$$\text{TCL } (0;50°C) = |\ dl/l_0 \text{ max. }| + |\ dl/l_0 \text{ min.}| \qquad (2)$$

where "dl" denotes the length change at the respective temperature and "$l_0$" denotes the length of the test specimen at 0°C. The calculation is based on the absolute values of the $dl/l_0$ values.

Figures 7 to 9 show expansion curves of known materials, from which the $dl/l_0$ max. values and $dl/l_0$ min. values for calculating the TCL value can be read off (see also below). The expansion curves each show a curved course in the temperature range 0°C to 50°C.

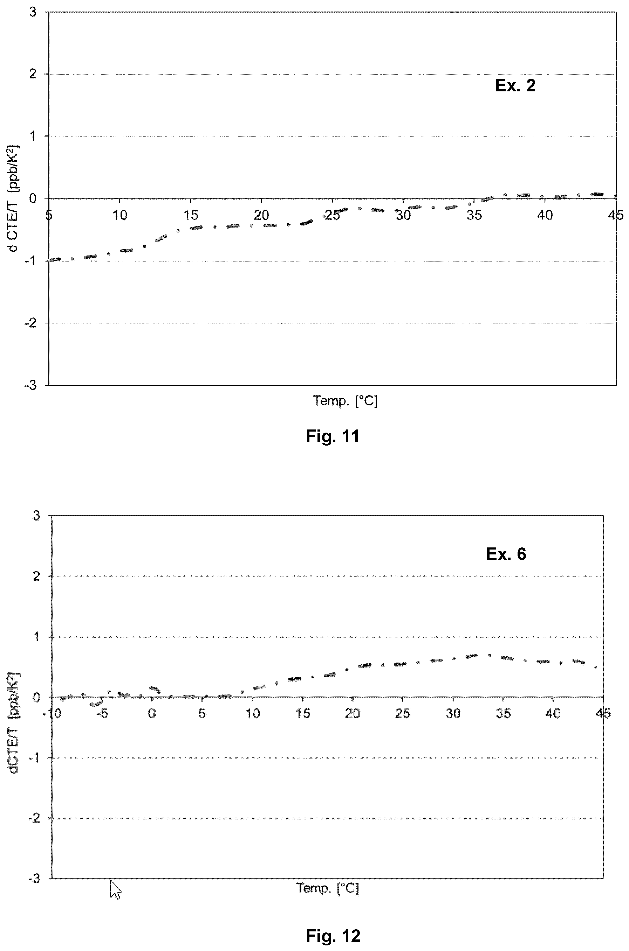

In the context of the present invention, however, a flat course of the expansion curve in the temperature range 0°C to 50°C is an advantageous feature of the glass-ceramic and a precision component (see Figures 12 and 13). For some advantageous variants, depending on the application area of the component, a flat course of the expansion curve may also be desired for a different temperature range, particularly in a range (0;80), (0;100), (20;40), (20;70) and/or (-10;30).

Preferably, the TCL in the chosen temperature range, for example for the temperature range from 0°C to 50°C, is at most 1.00 ppm or at most 0.50 ppm or at most 0.01 ppm.

As a statement of how strongly the curve of thermal expansion deviates from a simple linear course, the parameter F is introduced for an advantageous embodiment of the invention as a measure of the flatness of the expansion curve, enabling a classification of CTE curves:

$$F = \text{TCL } (0;\ 50°C)\ /\ |\text{Expansion } (0;\ 50°C)| \qquad (3)$$

The parameter F is calculated by forming the quotient of the TCL (0;50) value [in ppm] (see above) and the expansion difference between the temperature points of 0°C and 50°C [in ppm]. Since the expansion curve for TCL determination is normalized by definition such that the length change at 0°C is 0 ppm, the "expansion difference between the temperature points of 0°C and 50°C" corresponds to the "expansion at 50°C" as given in the tables. To calculate the parameter F, the absolute value of the expansion at 50°C is used.

It is advantageous if the parameter F for the respective material or component is F < 1.10 or < 1.05 or < 1.03. The closer the parameter F is to 1, the flatter the expansion curve.

Advantageous glass-ceramics and precision components of the invention thus exhibit, for example, a very flat course of their expansion curves in the temperature range from 0°C to 50°C, i.e. they are not only zero-expanding in the considered temperature range but also show a small variation in the change of length expansion and thus of the differential CTE in this range. As can be seen in Figure 9, advantageous examples of the invention also exhibit a flat course of their expansion curves over an even wider temperature range (here exemplarily from 0°C to 65°C). The expansion behavior can also be considered in other selected temperature ranges, particularly (0;80), (0;100), (-10;30), (20;40), (20,70), which is described further below.

Glass-ceramics with a flat course of the expansion curves are very advantageous, as now a precision component can not only be optimized for the later application temperature but also exhibits equally low thermal expansion at higher and/or lower temperature stresses, e.g. during manufacturing. Precision components for microlithography, EUV microlithography (also briefly "EUV lithography" or "EUVL") and metrology are usually used under standard cleanroom conditions, particularly at a room temperature of 22°C. The CTE can be adapted to this application temperature. However, such components are subjected to various process steps, such as coating with metallic layers, cleaning, structuring and/or exposure processes, in which higher or in some cases lower temperatures than those prevailing during later use in the cleanroom may occur. Advantageous glass-ceramics and precision components made from them, which have a parameter F of <1.10 and thus exhibit optimized zero expansion not only at application temperature, but also at possibly higher and/or lower temperatures during manufacturing, are therefore very advantageous. Properties such as freedom from hysteresis and a parameter F < 1.10 are particularly advantageous if the precision component or a glass-ceramic is used in EUV lithography, i.e. if the precision component is, for example, an EUVL mirror or EUVL mask blank or a corresponding substrate for these, since in EUV lithography, particularly the mirrors or masks are heated very unevenly at points or in the beam direction due to irradiation with high-energy radiation. For such operating conditions, it is advantageous if the precision component or glass-ceramic has a low slope of the CTE-T curve in a temperature range around the application temperature (see below).

Advantageous glass-ceramics and precision components that are even better optimized for a later application temperature at 20 or 22°C are characterized by having a relative length change ($dl/l_0$) of $\leq |0.10|$ ppm, preferably of $\leq |0.09|$ ppm, particularly preferably of $\leq |0.08|$ ppm and especially preferably of $\leq |0.07|$ ppm in the temperature range from 20°C to 30°C and/or a relative length change ($dl/l_0$) of $\leq 10.171$ ppm, preferably of $\leq |0.15|$ ppm, particularly preferably of $\leq 10.131$ ppm and especially preferably of $\leq |0.11|$ ppm in the temperature range from 20°C to 35°C. Alternatively or additionally,

**EP 4 650 330 A1**

such optimized glass-ceramics and precision components can be characterized by having a relative length change ($dl/l_0$) of $\leq 10.301$ ppm, preferably of $\leq 10.251$ ppm, particularly preferably of $\leq |0.20|$ ppm and especially preferably of $\leq |0.15|$ ppm in the temperature range from 20°C to 40°C. The characteristics of the relative length change related to the different temperature intervals can preferably be taken from the $dl/l_0$ curves of Figures 7 to 9. When referring to the relative length change ($dl/l_0$), the specifications naturally refer to the absolute value of the respective value.

A zero-expanding, hysteresis-free material with such advantageous expansion behavior is particularly suitable for use as a substrate for an EUVL mirror or as an EUVL mirror, which is heated to different degrees in light and shadow areas during operation, e.g. due to the respective exposure mask. Due to the above-mentioned low relative length change, an EUVL mirror formed from the advantageous glass-ceramic exhibits lower local gradients (local gradients or local slopes) in the topography of the mirror surface than an EUVL mirror manufactured with known materials. The same applies analogously to EUVL mask blanks or EUVL masks or EUVL photomasks.

Especially for a glass-ceramic that shows a very flat course of the expansion curve in the considered temperature range, which is close to 0 ppm or fluctuates around 0 ppm - which is overall an advantageous expansion behavior - it can be advantageous to introduce, alternatively or in addition to the parameter F, another measure for the flatness of the expansion curve, in which the expansion curve is not considered in the temperature range (0;50), but in another temperature interval (T.i.), preferably in the temperature range (0;80), (0;100), (20;40), (20;70) and/or (-10; 30). This allows a better classification of the expansion behavior with regard to the later areas of application.

The alternative parameter $f_{T.i.}$ has the unit (ppm/K) and is defined as:

$$f_{T.i.} = TCL_{(T.i.)} / \text{width of the temperature interval (T.i.)} \quad (4)$$

where T.i. describes the respective temperature interval considered.

The $TCL_{(T.i.)}$ value is the distance between the highest $dl/l_0$ value and the lowest $dl/l_0$ value in the respective temperature range (T.i.) considered, where the expansion curve is also normalized by definition for the $TCL_{(T.i.)}$ determination such that the length change at 0°C is 0 ppm. For example:

$$TCL_{(20;40°C)} = | \, dl/l_0 \text{ max.} \, | + | \, dl/l_0 \text{ min.}| \quad (5)$$

where "dl" denotes the length change at the respective temperature and "$l_0$" denotes the length of the test specimen at 0°C. The calculation is based on the absolute values of the $dl/l_0$ values.

The alternative parameter $f_{T.i.}$ is calculated according to formula (4) by forming the quotient of the $TCL_{(T.i.)}$ value [in ppm] (see above) and the width of the temperature interval (T.i.) given in [K], in which the expansion difference is considered. The width of the considered temperature interval between 20°C and 40°C is 20K. If, on the other hand, the course of the expansion curve is considered in the interval T.i.= (20;70) or (-10;30), the divisor for formula (4) is 50K or 40K, respectively.

In an advantageous embodiment, the glass-ceramic has an alternative parameter $f_{(20;40)} < 0.024$ ppm/K and/or an alternative parameter $f_{(20;70)} < 0.039$ ppm/K and/or an alternative parameter $f_{(-10;30)} < 0.015$ ppm/K.

Glass-ceramics with a very flat course of the expansion curves are very advantageous, as now a precision component can not only be optimized for the later application temperature, but also for example for higher and/or lower temperature stresses that can be expected. The alternative parameter $f_{T.i.}$ is suitable for defining an appropriate material according to the specifications required for certain component applications and for providing a corresponding precision component. Special precision components and their applications are described below and are included here.

According to an advantageous embodiment of the glass-ceramic or a component made from it, it can be advantageous if the alternative parameter $f_{(20;40)} < 0.024$ ppm/K, preferably < 0.020 ppm/K, preferably < 0.015 ppm/K. A hysteresis-free, zero-expanding component with such expansion behavior in the temperature range (20;40) is particularly well suited as a precision component for microlithography and EUV microlithography at room temperature. An example of such an advantageous glass-ceramic is shown in Figure 9.

According to an advantageous embodiment of the glass-ceramic or a component made from it, it can be advantageous if the alternative parameter $f_{(20;70)} < 0.039$ ppm/K, preferably < 0.035 ppm/K, preferably < 0.030 ppm/K, preferably < 0.025 ppm/K, preferably < 0.020 ppm/K. A hysteresis-free, zero-expanding component with such expansion behavior in the temperature range (20;70) is also particularly well suited as a precision component for microlithography and EUV microlithography. It is particularly advantageous if the component also exhibits equally low thermal expansion at higher temperature stresses that can occur locally or over an area, for example during the production of the precision component, but also during operation. Further details on the temperature stresses occurring in EUVL precision components have already been described above in connection with the parameter F, to which reference is made here to avoid repetition. An example of such an advantageous glass-ceramic is shown in Figure 7.

According to an advantageous embodiment of the glass-ceramic or a component made from it, it can be advantageous if the alternative parameter $f_{(-10;30)}$ < 0.015 ppm/K, preferably < 0.013 ppm/K, preferably < 0.011 ppm/K. A hysteresis-free, zero-expanding component with such expansion behavior in the temperature range (-10;30) is particularly well suited as a precision component, especially as mirror substrates for applications where temperatures lower than room temperature can occur, for example as mirror substrates in astronomy or earth observation from space. Corresponding components are described below.

A particularly advantageous embodiment of a glass-ceramic or a component made from it has an expansion curve for which at least two of the alternative parameters $f_{(T.i.)}$ apply.

A particularly advantageous embodiment of a glass-ceramic or a component made from it has an expansion curve for which the parameter F and at least one of the alternative parameters $f_{(T.i.)}$ apply.

## CTE Plateau

Figures 1 to 4 show that advantageous embodiments of the LAS glass-ceramic and the precision component exhibit a CTE plateau. A glass-ceramic with a plateau, i.e. with optimized zero expansion over a wide temperature range, offers the same advantages that were already described above in connection with the flat course of the expansion curves and the parameter F.

It is advantageous if the differential CTE exhibits a plateau near 0 ppm/K, i.e. the differential CTE in a temperature interval $T_P$ with a width of at least 40 K or at least 50 K or at least 60 K or at least 70 K is less than 0 ± 0.015 ppm/K. The temperature interval of the CTE plateau is denoted by $T_P$. Advantageously, the differential CTE in a temperature interval $T_P$ with a width of at least 40 K or at least 50 K can be less than 0 ± 0.010 ppm/K or less than 0 ± 0.005 ppm/K.

A CTE plateau is thus understood to be a region extending over a section of the CTE-T curve, in which the differential CTE does not exceed a value of 0 ± 0.015 ppm/K or 0 ± 0.010 ppm/K or 0 ± 0.005 ppm/K, i.e. a CTE close to 0 ppb/K.

Advantageously, the differential CTE in a temperature interval $T_P$ with a width of at least 40 K can be less than 0 ± 0.015 ppm/K, i.e. 0 ± 15 ppb/K. In a preferred embodiment, a CTE plateau of 0 ± 0.01 ppm/K, i.e. 0 ± 10 ppb/K, can be formed over a temperature interval of at least 50 K.

It can be advantageous if the temperature interval $T_P$ is in a range of -10 to +100°C or 0 to 80°C or 15 to 80°C.

The position of the CTE plateau of the glass-ceramic is preferably adapted to the application temperature $T_A$ of the precision component, so that $T_P = T_A \pm x$, with x selected from the group consisting of 20, 25, 30 or 40. Preferred application temperatures $T_A$ are in the range - 60°C to +100°C, more preferably from -40°C to +80°C. Special variants of the present invention concern precision components and glass-ceramics for application temperatures $T_A$ of 0°C, 5°C, 10°C, 22°C, 40°C, 60°C, 80°C and 100°C. The CTE plateau, i.e. the curve region with the small deviation of the differential CTE in the temperature interval $T_P$, can also be in the temperature range of [-10;100]; [0;80], [0; 30°C], [10; 40°C], [20; 50°C], [30; 60°C], [40; 70°C] and/or [50; 80°C].

Figure 1 shows, using Example 4 from Table 1, that this glass-ceramic has a CTE of 0 ± 0.010 ppm/K in the displayed temperature range from 15°C to 90°C, i.e. a 10-ppb plateau with a width of 75 K. The glass-ceramic even has a CTE of 0 ± 0.005 ppm/K in the temperature range from 17°C to 85°C, i.e. a 5-ppb plateau with a width of almost 70 K.

Figure 2 shows for Example 2 from Table 1 that the glass-ceramic has a CTE of 0 ± 0.010 ppm/K from 12°C to 90°C, i.e. a 10-ppb plateau with a width of 78 K.

Figure 3 shows for Example 2 a glass-ceramic with optimized CTE plateau in the range between -10 and 23°C having a CTE of 0 ± 0.005 ppm/K, i.e. a 5-ppb plateau.

Figure 4 shows for Example 6 from Table 1 that the glass-ceramic has a CTE of 0 ± 0.005 ppm/K in the range relevant for EUV lithography between 15 and 30°C, i.e. a 5-ppb plateau. This glass-ceramic meets the requirements for the mean CTE (19;25) mentioned in standard SEMI P37-1109 for EUVL substrates and blanks. The zero crossing of this CTE-T curve is at 22°C.

Another measure for advantageous thermal expansion is the slope of the CTE-T curve, which can be obtained by differentiating the CTE-T curve. According to an advantageous embodiment of the invention, the CTE-T curve of the glass-ceramic or precision component thus has at least one curve section with low slope, in particular a slope of at most 0 ± 1.5 ppb/$K^2$, advantageously of at most 0 ± 1.0 ppb/$K^2$, advantageously of at most 0 ± 0.8 ppb/$K^2$, preferably of at most 0 ± 0.7 ppb/$K^2$, preferably of at most 0 ± 0.6 ppb/$K^2$, according to special variants even only of at most 0 ± 0.5 ppb/$K^2$.

The temperature interval with low slope is preferably adapted to the application temperature $T_A$ of the precision component, so that $T_P = T_A \pm x$, with x selected from the group consisting of 10, 15, 20, 25, 30 or 40. Preferred application temperatures $T_A$ are in the range -60°C to +100°C, more preferably from -40°C to +80°C. Special variants of the present invention concern glass-ceramics and precision components for application temperatures $T_A$ of 0°C, 5°C, 10°C, 22°C, 40°C, 60°C, 80°C and 100°C. The temperature interval with low slope can also be in the temperature range of [-10;100]; [0;80], [0; 30°C], [10; 40°C], [20; 50°C], [30; 60°C], [40; 70°C] and/or [50; 80°C].

Figures 10 to 12 show the slope of the CTE-T curves of advantageous glass-ceramics according to Examples 4, 2 and 5 in the temperature range from -10°C or 5°C to 45°C. The CTE slopes are below 0 ± 1.0 ppb/$K^2$ in the entire

temperature range.

Figure 13 shows the slope of the CTE-T curve of glass-ceramic with the same composition as Example 9 in the temperature range from -5°C to 45°C, ceramized to a mean CTE[0;50°C] of -0.009 ppm/K.

Glass-ceramics and precision components with such expansion behavior are particularly well suited for EUV lithography applications (e.g. as mirrors or substrates for mirrors or masks or mask blanks) since in this area the requirements for the materials and precision components used for the optical components are becoming increasingly higher with regard to extremely low thermal expansion, a zero crossing of the CTE-T curve near the application temperature and especially a low slope of the CTE-T curve. Within the scope of the invention, advantageous embodiments of a glass-ceramic or precision component exhibit a very flat CTE curve, where the curve shows both a zero crossing and a very low CTE slope and possibly a very flat plateau.

The feature of low slope can be present with or without the formation of an advantageous CTE plateau.

Other Properties

Advantageous glass-ceramics and precision components made from them further exhibit good internal quality. Preferably, they have at most 5 inclusions per 100 cm$^3$, more preferably at most 3 inclusions per 100 cm$^3$, most preferably at most 1 inclusion per 100 cm$^3$. According to the invention, inclusions are understood to be both bubbles and crystallites which have a diameter of more than 0.3 mm.

According to a variant of the invention, precision components are provided which have a diameter or edge length of at most 800 mm and a thickness of at most 100 mm and which have at most 5, preferably at most 3, more preferably at most 1 inclusion per 100 cm$^3$ each with a diameter of a size of more than 0.03 mm.

In addition to the number of inclusions, the maximum diameter of detected inclusions also serves as a measure of the quality of internal quality. The maximum diameter of individual inclusions in the total volume of a glass-ceramic with a diameter of less than 500 mm is preferably at most 0.6 mm, in the volume critical for the application, for example near the surface, preferably at most 0.4 mm. The maximum diameter of individual inclusions in a precision component with a diameter of 500 mm to less than 2 m is preferably at most 3 mm, in the volume critical for the application, for example near the surface, preferably at most 1 mm.

The invention further relates to the use of a glass-ceramic according to the invention for a precision component. The glass-ceramic can, for example, form a substrate for the precision component or represent the precision component itself.

All properties and ranges mentioned above for the glass-ceramic also apply to a precision component comprising or consisting of the glass-ceramic.

Furthermore, the invention relates to the use of a glass-ceramic according to the invention in a precision component, particularly for use in metrology, spectroscopy, measurement technology, lithography, astronomy or earth observation from space, for example as mirrors or mirror substrates for segmented or monolithic astronomical telescopes or also as weight-reduced or ultra-light mirror substrates for space-based telescopes, for example, or as high-precision structural components for distance measurement, e.g. in space, or optics for earth observation, as precision components such as standards for precision measurement technology, precision scales, reference plates in interferometers, as mechanical precision parts, e.g. for ring laser gyroscopes, spiral springs for the watch industry, as mirrors and prisms in LCD lithography, for example, as mask holders, wafer stages, reference plates, reference frames and grid plates in microlithography and in EUV (extreme UV) microlithography, and additionally as mirrors or mirror substrates and/or photomask substrates or photomask blanks or reticle mask blanks in EUV microlithography.

Precision components of different sizes can be produced with a glass-ceramic according to the invention:
One embodiment concerns precision components with smaller dimensions, particularly for (right)angular shapes with edge lengths (width and/or depth) or for round surfaces with diameters of at least 100 mm and/or at most 1500 mm and/or a thickness of less than 50 mm, preferably less than 10 mm and/or at least 1 mm, more preferably at least 2 mm. Such precision components can be used, for example, in microlithography and EUV lithography.

Another embodiment concerns precision components with very small dimensions, particularly with edge lengths (width and/or depth) or diameters and/or thickness of a few mm (for example at most 20 mm or at most 10 mm or at most 5 mm or at most 2 mm or at most 1 mm) to a few tenths of a mm (for example at most 0.7 mm or at most 0.5 mm). These precision elements can be, for example, a spacer in an interferometer or a component for ultra-stable clocks in quantum technology.

However, very large precision components can also be produced. One embodiment of the invention thus concerns components with large volume. In the sense of this application, this should be understood as a component with a mass of at least 300 kg, preferably at least 400 kg, preferably at least 500 kg, preferably at least 1 t, more preferably at least 2 t, according to one variant of the invention at least 5 t, or with edge lengths (width and/or depth) for (right)angular shapes of at least 0.5 m, more preferably at least 1 m and a thickness (height) of at least 50 mm, preferably at least 100 mm, or for round shapes with a diameter of at least 0.5 m, more preferably at least 1 m, more preferably at least 1.5 m and/or with a thickness (height) of at least 50 mm, preferably at least 100 mm. For special embodiments of the invention, it can also be even larger components with, for example, a diameter of at least 3 m or at least 4 m or larger. According to one variant, the invention also concerns rectangular components, where preferably at least one surface has an area of at least 1 $m^2$, preferably at least 1.2 $m^2$, more preferably at least 1.4 $m^2$. Usually, large-volume components are produced which have a significantly larger base area than height. However, it can also be large-volume components which have a shape approximating a cube or a sphere.

Precision components can be, for example, optical components, namely a so-called normal incidence mirror, i.e. a mirror which is operated near perpendicular radiation incidence, or a so-called grazing incidence mirror, i.e. a mirror which is operated at grazing radiation incidence. Such a mirror comprises, in addition to the substrate, a coating reflecting the incident radiation. Particularly in the case of a mirror for X-ray radiation, the reflecting coating is, for example, a multilayer system or multilayer with a plurality of layers with high reflectivity in the X-ray range at non-grazing incidence. Preferably, such a multilayer system of a normal incidence mirror comprises 40 to 200 layer pairs, consisting of alternating layers of e.g. one of the material pairs Mo/Si, Mo/Bi, Ru/Si and/or MoRu/Be.

In particular, the optical elements according to the invention can be X-ray optical elements, i.e. optical elements which are used in connection with X-ray radiation, especially soft X-ray radiation or EUV radiation, particularly reticle masks or photomasks operated in reflection, especially for EUV microlithography. They can advantageously be mask blanks. Furthermore, the precision component is advantageously usable as a mirror for EUV lithography or as a substrate for a mirror for EUV lithography.

Furthermore, the precision component according to the invention can be a component, especially a mirror for astronomical applications. Such components for astronomical applications can be used both terrestrially and in space. High-precision structural components for distance measurements, e.g. in space, are another advantageous field of application.

The precision component according to the invention can be a lightweight structure. The component according to the invention can further comprise a lightweight structure. This means that in some areas of the component, cavities are provided for weight reduction. Preferably, the weight of a component is reduced by lightweight processing by at least 80%, more preferably at least 90%, compared to the unprocessed component.

The invention further relates to a precision component comprising an LAS glass-ceramic according to the invention. Details on this have already been described above in connection with the glass-ceramic and its use in precision components. This disclosure is fully incorporated into the description of the precision component.

It is understood that the features mentioned above and those to be explained below can be used not only in the respective combinations indicated, but also in other combinations without departing from the scope of the invention.

**Examples**

Tables 1 to 4 show compositions of examples of glass-ceramics according to the invention and compositions of comparative examples as well as their properties.

The compositions were melted from commercial raw materials such as oxides, carbonates and nitrates in conventional manufacturing processes. The produced green glasses were first ceramicized at the respective maximum temperature specified for the indicated duration.

The production of a glass-ceramic for a precision component, especially a large precision component, is described for example in WO 2015/124710 A1.

If fields are empty in the following tables for the composition information, this means that this component(s) was/were not intentionally added or is/are not contained. The tables show the absolute value of the hysteresis.

Table 1: Compositions (in mol%), ceramization and properties

| Example No. (Ex.) | 1 | 2 | 3 | 4 | 5 | 6 |
|---|---|---|---|---|---|---|
| Li$_2$O | 9.00 | 9.00 | 9.05 | 8.80 | 8.95 | 8.80 |
| Na$_2$O | 0.10 | 0.10 | | 0.05 | | 0.05 |
| K$_2$O | 1.45 | 1.30 | 1.20 | 1.45 | 1.40 | 1.45 |
| MgO | | | | | 0.10 | |
| ZnO | | | | | 0.10 | |
| CaO | 1.75 | 1.85 | 1.90 | 1.75 | 1.65 | 1.70 |
| BaO | | | | | | |
| SrO | | | | | | |

(continued)

| Example No. (Ex.) | 1 | 2 | 3 | 4 | 5 | 6 |
|---|---|---|---|---|---|---|
| $Al_2O_3$ | 18.10 | 18.10 | 18.05 | 18.20 | 18.00 | 18.40 |
| $SiO_2$ | 63.75 | 63.90 | 64.00 | 63.90 | 63.90 | 63.80 |
| $P_2O_5$ | 2.65 | 2.65 | 2.65 | 2.65 | 2.70 | 2.65 |
| $TiO_2$ | 2.00 | 1.90 | 1.95 | 2.00 | 2.00 | 2.00 |
| $ZrO_2$ | 1.00 | 1.00 | 1.00 | 1.00 | 1.00 | 1.00 |
| $SnO_2$ | | | | | | |
| Cl | | | | | | |
| $Sb_2O_3$ | | | | | | |
| $As_2O_3$ | 0.20 | 0.20 | 0.20 | 0.20 | 0.20 | 0.15 |
| Sum | 100.00 | 100.00 | 100.00 | 100.00 | 100.00 | 100.00 |
| $Na_2O + BaO$ | 0.10 | 0.10 | 0.00 | 0.05 | 0.00 | 0.05 |
| $SiO_2+(4.6 \times Al_2O_3)$ | 147.01 | 147.16 | 147.03 | 147.62 | 146.7 | 148.44 |
| $R_2O$ (R=Na,K,Cs,Rb) | 1.55 | 1.40 | 1.20 | 1.50 | 1.40 | 1.50 |
| MgO+ZnO | 0.00 | 0.00 | 0.00 | 0.00 | 0.20 | 0.00 |
| Va [°C] | | | | 1268 | | |
| $T_3$ [°C] | | | | 1433 | | |
| Ceramization temperature [°C] | 805 | 825 | 825 | 790 | 805 | 805 |
| Ceramization duration [days] | 2.5 | 2.5 | 2.5 | 2.5 | 2.5 | 2.5 |
| Crystal phase [Vol.%] | 58 | 58 | 58 | 57 | 57 | 56 |
| Crystal size [nm] | 51 | 45 | 45 | 52 | 41 | 53 |
| Mean CTE(0;+50°C) [ppm/K] | 0.008 | 0.002 | 0.018 | 0.017 | 0.002 | 0.007 |
| TCL (0;+50°C) [ppm] | | | 0.11 | 0.33 | 0.48 | |
| \|Expansion at 50°C\| [ppm] | | | 0.11 | 0.30 | 0.48 | |
| Parameter F | | | 1.00 | 1.10 | 1.00 | |
| Hyst @ 45 °C [ppm] | < 0.05 | < 0.05 | < 0.05 | < 0.05 | < 0.05 | < 0.05 |
| Hyst @ 35 °C [ppm] | | < 0.05 | < 0.05 | < 0.05 | < 0.05 | < 0.05 |
| Hyst @ 22 °C [ppm] | < 0.05 | < 0.05 | < 0.05 | < 0.05 | < 0.05 | < 0.05 |
| Hyst @ 10 °C [ppm] | < 0.05 | < 0.05 | < 0.05 | 0.058 | 0.060 | < 0.05 |
| Hyst @ +5 °C [ppm] | 0.052 | < 0.05 | < 0.05 | 0.076 | 0.084 | 0.064 |
| Hyst @ 0°C [ppm] | 0.082 | 0.073 | 0.069 | 0.109 | 0.123 | 0.092 |
| Hyst @ -5 °C [ppm] | | < 0.10 | | | | |
| Ceram. temperature [°C] | | 825 | 820 | | | |
| Ceram. duration [days] | | 60 | 60 | | | |
| Mean CTE (-30;+70°C)[ppm/K] | | 0.02 | 0.009 | | | |
| Mean CTE (-40;+80°C)[ppm/K] | | 0.01 | 0.02 | | | |

Table 2: Compositions (in mol%), ceramization and properties

| Example No. (Ex.) | 7 | 8 | 9 | 10 | 11 | 12 |
|---|---|---|---|---|---|---|
| $Li_2O$ | 8.90 | 8.70 | 8.80 | 8.80 | 9.00 | 9.00 |

(continued)

| Example No. (Ex.) | 7 | 8 | 9 | 10 | 11 | 12 |
|---|---|---|---|---|---|---|
| $Na_2O$ | 0.05 | 0.05 | 0.05 | 0.05 | 0.05 | 0.05 |
| $K_2O$ | 1.45 | 1.45 | 1.45 | 1.50 | 1.20 | 1.40 |
| MgO | | | | | | |
| ZnO | | | | | | |
| CaO | 1.70 | 1.70 | 1.70 | 1.80 | 1.85 | 1.85 |
| BaO | | | | | 0.15 | |
| SrO | | | | | | |
| $Al_2O_3$ | 18.20 | 18.30 | 18.00 | 18.20 | 18.15 | 18.10 |
| $SiO_2$ | 63.75 | 64.10 | 64.20 | 63.90 | 63.70 | 63.65 |
| $P_2O_5$ | 2.75 | 2.55 | 2.65 | 2.70 | 2.75 | 2.75 |
| $TiO_2$ | 2.00 | 1.95 | 1.95 | 1.90 | 1.95 | 2.00 |
| $ZrO_2$ | 1.00 | 1.00 | 1.00 | 0.95 | 1.00 | 1.00 |
| $SnO_2$ | | | | | 0.20 | 0.20 |
| Cl | | | | | 0.00 | 0.00 |
| $Sb_2O_3$ | | | | | | |
| $As_2O_3$ | 0.20 | 0.20 | 0.20 | 0.20 | 0.00 | 0.00 |
| Sum | 100.00 | 100.00 | 100.00 | 100.00 | 100.00 | 100.00 |
| $Na_2O + BaO$ | 0.05 | 0.05 | 0.05 | 0.05 | 0.20 | 0.05 |
| $SiO_2+(4.6 \times Al_2O_3)$ | 147.47 | 148.28 | 147 | 147.62 | 147.19 | 146.91 |
| $R_2O$ (R=Na,K,Cs,Rb) | 1.50 | 1.50 | 1.50 | 1.55 | 1.25 | 1.45 |
| MgO+ZnO | 0.00 | 0.00 | 0.00 | 0.00 | 0.00 | 0.00 |
| Va [°C] | | | | | | 1262 |
| $T_3$ [°C] | | | | | | 1425 |
| Ceramization temperature [°C] | 795 | 795 | 800 | 795 | 830 | 825 |
| Ceramization duration [days] | 2.5 | 2.5 | 2.5 | 2.5 | 2.5 | 2.5 |
| Crystal phase [Vol.%] | 56 | 56 | 56 | 56 | 56 | 55 |
| Crystal size [nm] | 51 | 51 | 49 | 52 | 47 | 49 |
| Mean CTE(0;+50°C) [ppm/K] | -0.015 | -0.019 | 0.020 | -0.005 | 0.009 | -0.009 |
| TCL (0;+50°C) [ppm] | | | | | | |
| \|Expansion at 50°C\| [ppm] | | | | | | |
| Parameter F | | | | | | |
| Hyst @ 45 °C [ppm] | < 0.05 | < 0.05 | < 0.05 | < 0.05 | < 0.05 | < 0.05 |
| Hyst @ 35 °C [ppm] | < 0.05 | < 0.05 | < 0.05 | < 0.05 | < 0.05 | < 0.05 |
| Hyst @ 22 °C [ppm] | < 0.05 | < 0.05 | < 0.05 | < 0.05 | < 0.05 | < 0.05 |
| Hyst @ 10 °C [ppm] | 0.05 | < 0.05 | < 0.05 | 0.05 | < 0.05 | < 0.05 |
| Hyst @ +5 °C [ppm] | 0.07 | < 0.05 | 0.06 | 0.07 | < 0.05 | < 0.05 |
| Hyst @ 0°C [ppm] | 0.11 | 0.08 | 0.10 | 0.12 | 0.07 | 0.062 |

Table 3: Compositions (in mol%), ceramization and properties

| Example No. (Ex.) | 13 | 14 | 15 | 16 | 17 | 18 | 19 | 20 |
|---|---|---|---|---|---|---|---|---|
| $Li_2O$ | 8.95 | 8.80 | 8.90 | 8.85 | 8.75 | 8.75 | 8.85 | 8.90 |
| $Na_2O$ | 0.10 | | | 0.10 | 0.15 | 0.10 | 0.15 | 0.05 |
| $K_2O$ | 1.35 | 1.35 | 1.25 | 1.60 | 1.35 | 1.35 | 1.35 | 1.30 |
| MgO | 0.00 | 0.10 | 0.05 | | | | | |
| ZnO | 0.00 | | 0.05 | | | | | |
| CaO | 1.85 | 1.70 | 1.60 | 1.60 | 1.80 | 1.75 | 1.80 | 1.80 |
| BaO | | | | | | | | |
| SrO | | | | | | | | |
| $Al_2O_3$ | 18.05 | 18.15 | 18.10 | 18.25 | 18.20 | 18.15 | 18.20 | 18.15 |
| $SiO_2$ | 63.50 | 63.95 | 63.75 | 63.90 | 64.10 | 64.10 | 63.85 | 64.00 |
| $P_2O_5$ | 2.75 | 2.65 | 2.80 | 2.60 | 2.75 | 2.70 | 2.70 | 2.70 |
| $TiO_2$ | 2.00 | 2.00 | 2.00 | 1.95 | 1.60 | 1.65 | 1.75 | 1.60 |
| $ZrO_2$ | 1.00 | 1.00 | 1.00 | 1.00 | 0.90 | 1.05 | 0.95 | 1.10 |
| $SnO_2$ | 0.20 | 0.20 | 0.30 | | 0.20 | 0.20 | 0.20 | 0.20 |
| Cl | 0.25 | 0.10 | 0.15 | | 0.20 | 0.20 | 0.20 | 0.20 |
| $Sb_2O_3$ | | | | | | | | |
| $As_2O_3$ | 0.00 | 0.00 | 0.05 | 0.15 | 0.00 | 0.00 | 0.00 | 0.00 |
| Sum | 100.00 | 100.00 | 100.00 | 100.00 | 100.00 | 100.00 | 100.00 | 100.00 |
| $Na_2O + BaO$ | 0.10 | 0.00 | 0.00 | 0.10 | 0.15 | 0.10 | 0.15 | 0.05 |
| $SiO_2+(4.6 \times Al_2O_3)$ | 146.53 | 147.44 | 147.01 | 147.85 | 147.82 | 147.59 | 147.57 | 147.49 |
| $R_2O$ (R=Na,K,Cs,Rb) | 1.45 | 1.35 | 1.25 | 1.70 | 1.50 | 1.45 | 1.50 | 1.35 |
| MgO+ZnO | 0.00 | 0.10 | 0.10 | 0.00 | 0.00 | 0.00 | 0.00 | 0.00 |
| Va [°C] | 1261 | | | | | | | |
| $T_3$ [°C] | 1424 | | | | | | | |
| Ceram. temperature [°C] | 805 | 795 | 785 | 790 | 825 | 800 | 800 | 800 |
| Ceram. duration [days] | 2.5 | 2.5 | 2.5 | 2.5 | 4.5 | 7.5 | 6.5 | 8.5 |
| Crystal phase [Vol.%] | 56 | 55 | 57 | 56 | 58 | 56 | 56 | 55 |
| Crystal size [nm] | 50 | 52 | 56 | 54 | 67 | 59 | 53 | 55 |
| Mean CTE(0;+50°C) [ppm/K] | -0.019 | -0.013 | -0.016 | +0.006 | -0.014 | -0.017 | -0.009 | -0.019 |
| TCL (0;+50°C) [ppm] | | | | | | | | |
| \|Expansion at 50°C\| [ppm] | | | | | | | | |
| Parameter F | | | | | | | | |
| Hyst @ 45 °C [ppm] | < 0.05 | < 0.05 | < 0.05 | < 0.05 | < 0.05 | < 0.05 | < 0.05 | < 0.05 |
| Hyst @ 35 °C [ppm] | < 0.05 | < 0.05 | < 0.05 | < 0.05 | < 0.05 | < 0.05 | < 0.05 | < 0.05 |
| Hyst @ 22 °C [ppm] | < 0.05 | < 0.05 | < 0.05 | < 0.05 | < 0.05 | < 0.05 | < 0.05 | < 0.05 |
| Hyst @ 10 °C [ppm] | < 0.05 | 0.05 | | < 0.05 | < 0.05 | < 0.05 | < 0.05 | < 0.05 |
| Hyst @ +5 °C [ppm] | < 0.05 | 0.09 | | < 0.05 | < 0.05 | < 0.05 | < 0.05 | < 0.05 |
| Hyst @ 0°C [ppm] | < 0.05 | | | | | | | |

Table 4: Compositions (in mol%), ceramization and properties

| Example No. | 21 | 22 | 23 | 24 | 25 | 26 |
|---|---|---|---|---|---|---|
| $Li_2O$ | 9.05 | 9.10 | 8.80 | 8.90 | 9.15 | 9.10 |
| $Na_2O$ | 0.10 | 0.10 | 0.10 | 0.10 | 0.60 | 0.65 |
| $K_2O$ | 1.35 | 1.35 | 1.30 | 1.35 | 0.90 | 0.90 |
| MqO | | | | | | |
| ZnO | | | | | | |
| CaO | 1.85 | 1.85 | 1.70 | 1.75 | 0.90 | 1.05 |
| BaO | | | | | 0.50 | 0.60 |
| SrO | | | | | | |
| $Al_2O_3$ | 18.20 | 18.15 | 18.45 | 18.50 | 18.10 | 18.05 |
| $SiO_2$ | 63.55 | 63.55 | 63.75 | 63.55 | 63.70 | 63.65 |
| $P_2O_5$ | 2.70 | 2.70 | 2.65 | 2.60 | 2.70 | 2.70 |
| $TiO_2$ | 2.00 | 2.00 | 2.00 | 2.00 | 2.00 | 2.05 |
| $ZrO_2$ | 1.00 | 1.00 | 1.00 | 1.00 | 1.05 | 1.05 |
| $SnO_2$ | 0.10 | | 0.15 | 0.15 | 0.20 | 0.20 |
| Cl | 0.10 | 0.10 | 0.10 | 0.10 | | |
| $Sb_2O_3$ | | | | | 0.20 | |
| $As_2O_3$ | 0.00 | 0.00 | 0.00 | 0.00 | | |
| Sum | 100.00 | 100.00 | 100.00 | 100.00 | 100.0 | 100.00 |
| Va [°C] | | | | | | |
| $T_3$ [°C] | | | | | | |
| Ceram. temperature [°C] | 810 | 825 | 825 | 800 | 820 | 825 |
| Ceram. duration [days] | 2.5 | 2.5 | 2.5 | 2.5 | 2.5 | 3 |
| Crystal phase [Vol.%] | 55 | 59 | 57 | 58 | 58 | 58 |
| Crystal size [nm] | 49 | 51 | 53 | 55 | 49 | 49 |
| Mean CTE(0;+50°C) [ppm/K] | 0.012 | 0.007 | -0,004 | -0.009 | 0.000 | -0.002 |
| TCL (0;+50°C) [ppm] | | | | | 0.1 | -0.08 |
| \|Expansion at 50°C\| [ppm] | | | | | 0.1 | -0.08 |
| Parameter F | | | | | 1.00 | 1.00 |
| Hyst @ 45 °C [ppm] | < 0.1 | < 0.1 | 0.09 | 0.06 | < 0.1 | < 0.05 |
| Hyst @ 35 °C [ppm] | < 0.1 | < 0.1 | 0.06 | <0.05 | < 0.1 | 0.07 |
| Hyst @ 22 °C [ppm] | < 0.1 | < 0.1 | <0.05 | <0.05 | < 0.1 | 0.07 |
| Hyst @ 10 °C [ppm] | < 0.1 | < 0.1 | <0.05 | <0.05 | < 0.1 | 0.06 |
| Hyst @ +5 °C [ppm] | < 0.1 | < 0.1 | 0.08 | 0.06 | < 0.1 | 0.05 |
| Hyst @ 0 °C [ppm] | < 0.1 | < 0.1 | - | 0.08 | < 0.1 | < 0.05 |
| Hyst @ -5 °C [ppm] | < 0.1 | < 0.1 | - | - | < 0.1 | < 0.05 |
| Ceramization temperature [°C] | | | | | 820 | 830 |
| Ceramization duration [days] | | | | | 2.5 | 2.5 |
| Mean CTE (-30;+70°C) [ppm/K] | | | | | -0.01 | -0.04 |
| Mean CTE (-40;+80°C) [ppm/K] | | | | | -0.02 | -0.05 |

**Claims**

1. LAS glass-ceramic, which has a mean thermal expansion coefficient CTE in a range of 0 to 50°C of at most $0 \pm 0.02 \times 10^{-6}$/K and a thermal hysteresis of < 0.1 ppm at least in the temperature range of 10°C to 35°C, wherein the LAS glass-ceramic comprises the following components (in mol% based on oxide):

   $SiO_2$ 60 - 70;
   $Li_2O$ 7 - 9.4;
   $R_2O$ 0.7 - 2.0, wherein R = Na, K, Cs, Rb;
   $MgO+ZnO$ 0 - 0.4;
   at least one component selected from the group consisting of $P_2O_5$ and RO, where RO is selected from CaO, BaO and/or SrO; and
   nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

2. LAS glass-ceramic according to claim 1, comprising the following components (in mol% based on oxide):

   $SiO_2$ 60 - 70;
   $Li_2O$ 7 - 9.4;
   $R_2O$ 0.7 - 2.0, wherein R = Na, K, Cs, Rb;
   $MgO+ZnO$ 0 - 0.4;
   $BaO$ 0 - < 0.5;
   at least one component selected from the group consisting of $P_2O_5$ and RO, where RO is selected from CaO and/or SrO; and
   nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

3. LAS glass-ceramic according to claim 1 or 2, comprising the following components (in mol% based on oxide):

   $SiO_2$ 60 - 70;
   $Li_2O$ 7 - 9.4;
   $K_2O$ 0.7 - 2.0;
   $Na_2O$ 0 - 0.4;
   $MgO+ZnO$ 0 - 0.4;
   at least one component selected from the group consisting of $P_2O_5$ and RO, where RO is selected from CaO and/or BaO and/or SrO; and
   nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

4. LAS glass-ceramic according to any one of the preceding claims, comprising the following components (in mol% based on oxide):

   | | |
   |---|---|
   | $SiO_2$ | 60 - 70; |
   | $Li_2O$ | 7 - 9.4; |
   | $K_2O$ | 0.7 - 2.0; |
   | $Na_2O$ | 0 - 0.4; |
   | $MgO+ZnO$ | 0 - 0.4; |
   | $BaO$ | 0 - < 0.5; |

   at least one component selected from the group consisting of $P_2O_5$ and RO, where RO is selected from CaO and/or SrO; and
   nucleating agents with a content of 1.5 to 6 mol%, where nucleating agents are at least one component selected from the group consisting of $TiO_2$, $ZrO_2$, $Ta_2O_5$, $Nb_2O_5$, $SnO_2$, $MoO_3$, $WO_3$.

5. LAS glass-ceramic according to any one of the preceding claims, wherein it contains $Al_2O_3$ with a content of 10 to 22 mol%, preferably 11 to 21 mol% and/or $P_2O_5$ with a content of 0.1 to 6 mol%, preferably 0.3 to 5 mol%.

6. LAS glass-ceramic according to any one of the preceding claims, wherein

   - if molar content $Al_2O_3$ < 17.0 mol% and preferably $\geq$ 15.8 mol%, then

      - $SiO_2$ 63.5 mol% - 65.6 mol% and
      - the following applies: 30.7 $\leq$ (molar content $SiO_2$ - (2 $\times$ molar content $Al_2O_3$)); or

   - if molar content $Al_2O_3$ $\geq$ 17.0 mol% and preferably $\leq$ 19.0, then

      - $SiO_2$ 62.0 mol% - 66.0 mol% and
      - the following applies: 142.5 $\leq$ (molar content $SiO_2$ + (4.6 $\times$ molar content $Al_2O_3$)) $\leq$ 149.0.

7. LAS glass-ceramic according to any one of the preceding claims, wherein the content of the sum ZnO + MgO is $\leq$ 0.2 mol% or $\leq$ 0.1 mol% or $\leq$ 0.05 mol% and/or the content of MgO is $\leq$ 0.4 mol% $\leq$ 0.2 mol% or $\leq$ 0.1 mol% or $\leq$ 0.05 mol% and/or the content of ZnO is $\leq$ 0.4 mol% $\leq$ 0.2 mol% or $\leq$ 0.1 mol% or $\leq$ 0.05 mol% and/or the LAS glass-ceramic is free of ZnO and/or MgO.

8. LAS glass-ceramic according to any one of the preceding claims, wherein the content of the sum of the nucleating agents is $\geq$ 1.5 mol%, preferably $\geq$ 2.5 mol%, advantageously $\geq$ 3 mol% and/or $\leq$ 6 mol%, advantageously $\leq$ 5 mol%, preferably $\leq$ 4.5 mol%, preferably $\leq$ 4 mol%.

9. LAS glass-ceramic according to any one of the preceding claims, wherein the LAS glass-ceramic contains a maximum of 0.05 mol% $As_2O_3$ as a refining agent.

10. LAS glass-ceramic according to any one of the preceding claims, wherein it contains as a refining agent instead of $As_2O_3$ or in addition to a maximum of 0.05 mol% $As_2O_3$ at least one alternative redox refining agent and/or at least one evaporation refining agent and/or at least one decomposition refining agent and/or wherein the alternative redox refining agent is at least one component selected from the group consisting of $Sb_2O_3$, $SnO_2$, $MnO_2$, $CeO_2$, $Fe_2O_3$ and/or wherein the evaporation refining agent comprises a halogen with refining effect and/or wherein the decomposition refining agent comprises a sulfate component.

11. LAS glass-ceramic according to any one of the preceding claims, which has a total length change TCL of TCL(0;50) < 0.2 or TCL(0;50) < 0.1.

12. LAS glass-ceramic according to any one of the preceding claims, wherein the differential CTE exhibits a plateau near 0 ppm/K, i.e. wherein differential CTE in a temperature interval TP with a width of at least 40 K or at least 50 K is less than 0 $\pm$ 0.010 ppm/K or less than 0 $\pm$ 0.005 ppm/K.

13. LAS glass-ceramic according to any one of the preceding claims, wherein the temperature interval TP is in a range of -10 to +100°C or 0 to 80°C or 15 to 80°C and/or wherein the CTE-T curve in a temperature interval TP with a width of at least 30 K has a slope of at most $\pm$1 ppb/K$^2$ and/or wherein the processing temperature Va is at most 1330°C, preferably at most 1320°C and/or wherein the CTE-T curve in a temperature interval with a width of at least 30 K has a slope of $\leq$ 0 $\pm$ 2.5 ppb/K$^2$, preferably $\leq$ 0 $\pm$ 2 ppb/K$^2$, preferably $\leq$ 0 $\pm$ 1.5 ppb/K$^2$, particularly preferably $\leq$ 0 $\pm$ 1 ppb/K$^2$.

14. LAS glass-ceramic according to any one of the preceding claims, wherein it exhibits a thermal hysteresis of < 0.1 ppm at least in the temperature range of 5°C to 45°C, advantageously at least in the temperature range > 0°C to 45°C, preferably at least in the temperature range of -5°C to 50°C.

15. Precision component comprising an LAS glass-ceramic according to any of claims 1 to 14 for use in metrology, spectroscopy, measurement technology, lithography, astronomy or earth observation from space, for example as mirrors or mirror substrates for segmented or monolithic astronomical telescopes or also as weight-reduced or ultra-light mirror substrates for space-based telescopes, for example, or as high-precision structural components for distance measurement, e.g. in space, or optics for earth observation, as precision components such as standards for precision measurement technology, precision scales, reference plates in interferometers, as mechanical precision parts, e.g. for ring laser gyroscopes, spiral springs for the watch industry, as mirrors and prisms in LCD lithography, for example, as mask holders, wafer stages, reference plates, reference frames and grid plates in microlithography and in EUV microlithography, as well as mirrors and/or photomask substrates or reticle mask blanks in EUV microlithography.

Fig. 1

Fig. 2

**Fig. 3**

**Fig. 4**

Fig. 5

Fig. 6

Fig. 7

Fig. 8

Fig. 9

Fig. 10

**Fig. 11**

**Fig. 12**

**Fig. 13**

**Fig. 14**

Europäisches
Patentamt

European
Patent Office

Office européen
des brevets

## EUROPEAN SEARCH REPORT

**Application Number**

EP 25 17 6432

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/002281 A1 (MITRA INA [DE]) 4 January 2024 (2024-01-04) * paragraphs [0150] - [0153], [0161]; examples 6,7,14,17; table 1 * ----- | 1-15 | INV. C03C10/00 C03C3/097 C03C3/11 |
| X | US 2022/298079 A1 (MITRA INA [DE]) 22 September 2022 (2022-09-22) * paragraphs [0039] - [0048]; examples 6,7,14,17; table 1 * ----- | 1-15 | |
| A | US 2024/092687 A1 (MITRA INA [DE] ET AL) 21 March 2024 (2024-03-21) * paragraphs [0046] - [0051]; tables 1,2 * ----- | 1-15 | |
| A | DE 20 2022 106821 U1 (SCHOTT AG [DE]) 22 December 2022 (2022-12-22) * paragraphs [0014] - [0019]; table 1 * ----- | 1-15 | |

**TECHNICAL FIELDS SEARCHED (IPC)**

C03C

The present search report has been drawn up for all claims

| Place of search | Date of completion of the search | Examiner |
|---|---|---|
| Munich | 23 September 2025 | Lecerf, Nicolas |

EPO FORM 1503 03.82 (P04C01)

## ANNEX TO THE EUROPEAN SEARCH REPORT
## ON EUROPEAN PATENT APPLICATION NO.

EP 25 17 6432

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2025

| Patent document cited in search report | Publication date | Patent family member(s) | | Publication date |
|---|---|---|---|---|
| US 2024002281 A1 | 04-01-2024 | EP | 4308511 A1 | 24-01-2024 |
| | | EP | 4308512 A1 | 24-01-2024 |
| | | JP | 2024511361 A | 13-03-2024 |
| | | JP | 2024511363 A | 13-03-2024 |
| | | KR | 20230158021 A | 17-11-2023 |
| | | KR | 20230158022 A | 17-11-2023 |
| | | TW | 202300471 A | 01-01-2023 |
| | | TW | 202306923 A | 16-02-2023 |
| | | US | 2024002281 A1 | 04-01-2024 |
| | | US | 2024077798 A1 | 07-03-2024 |
| | | WO | 2022194840 A1 | 22-09-2022 |
| | | WO | 2022194846 A1 | 22-09-2022 |
| US 2022298079 A1 | 22-09-2022 | CN | 115073008 A | 20-09-2022 |
| | | CN | 115073009 A | 20-09-2022 |
| | | CN | 119100596 A | 10-12-2024 |
| | | CN | 119191715 A | 27-12-2024 |
| | | DE | 102022105929 A1 | 22-09-2022 |
| | | DE | 102022105930 A1 | 22-09-2022 |
| | | EP | 4059902 A1 | 21-09-2022 |
| | | EP | 4059903 A1 | 21-09-2022 |
| | | JP | 2022142777 A | 30-09-2022 |
| | | JP | 2022142778 A | 30-09-2022 |
| | | JP | 2024073583 A | 29-05-2024 |
| | | JP | 2025029015 A | 05-03-2025 |
| | | KR | 20220129481 A | 23-09-2022 |
| | | KR | 20220129482 A | 23-09-2022 |
| | | TW | 202248162 A | 16-12-2022 |
| | | TW | 202300468 A | 01-01-2023 |
| | | US | 2022298062 A1 | 22-09-2022 |
| | | US | 2022298079 A1 | 22-09-2022 |
| US 2024092687 A1 | 21-03-2024 | CN | 117700112 A | 15-03-2024 |
| | | DE | 102022123616 A1 | 21-03-2024 |
| | | EP | 4339169 A1 | 20-03-2024 |
| | | JP | 7742385 B2 | 19-09-2025 |
| | | JP | 2024042686 A | 28-03-2024 |
| | | KR | 20240037860 A | 22-03-2024 |
| | | TW | 202423870 A | 16-06-2024 |
| | | US | 2024092687 A1 | 21-03-2024 |
| DE 202022106821 U1 | 22-12-2022 | DE | 202022106821 U1 | 22-12-2022 |
| | | EP | 4375246 A1 | 29-05-2024 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4851372 A
- US 5591682 A
- EP 587979 A
- US 7226881 B
- US 7645714 B
- DE 102004008824 A
- DE 102018111144 A
- US 20220298079 A1
- US 20220298062 A1
- WO 2022194846 A1
- DE 10202811144 A1
- DE 19939771 A
- US 20110098171 A
- WO 2015124710 A
- DE 102015113548 A
- WO 2015124710 A1

**Non-patent literature cited in the description**

- **O. LINDIG** ; **W. PANNHORST**. Thermal expansion and length stability of ZERODUR® in dependence on temperature and time. *APPLIED OPTICS*, October 1985, vol. 24 (20)
- **R. HAUG et al.** Length variation in ZERODUR® M in the temperature range from -60°C to +100°C. *APPLIED OPTICS*, October 1989, vol. 28 (19)
- **R. JEDAMZIK et al.** Modeling of the thermal expansion behavior of ZERODUR® at arbitrary temperature profiles. *Proc. SPIE*, 2010, vol. 7739
- **D.B. HALL**. Dimensional stability tests over time and temperature for several low-expansion glass-ceramics. *APPLIED OPTICS*, April 1996, vol. 35 (10)